# EUROPÄISCHE PATENTSCHRIFT

(11) **EP 3 966 071 B1**
(45) Veröffentlichungstag und Bekanntmachung des Hinweises auf die Patenterteilung: **17.04.2024**
(21) Anmeldenummer: 20726017.5
(22) Anmeldetag: 08.05.2020
(51) Int. Cl.: B60N 2/22

(54) **EINSTELLBESCHLAG FÜR EINEN FAHRZEUGSITZ**
ADJUSTMENT FITTING FOR A VEHICLE SEAT
FERRURE DE RÉGLAGE POUR UN SIÈGE DE VÉHICULE

(30) Priorität: 10.05.2019 DE 102019112345; 30.03.2020 DE 102020204128
(43) Veröffentlichungstag der Anmeldung: 16.03.2022
(73) Patentinhaber: Adient US LLC, Plymouth, MI 48170 (US)
(72) Erfinder: SCHOLZ, Grit, 42897 Remscheid (DE); ALBERT REGINOLD, Kirubaharan, 51399 Burscheid (DE); PARAMASIVAM, Balaji Lakshmanan, 51379 Leverkusen (DE); ROCK, Arkadius, 42719 Solingen (DE); HÜBNER, Daniel, 51371 Leverkusen (DE); YASEN, Mothanna, 42929 Wermelskirchen (DE); HENKEL, Dieter, 42897 Remscheid (DE); SCHÜLER, Rolf, 42579 Heiligenhaus (DE)
(74) Vertreter: Kutzenberger Wolff & Partner
(86) Internationale Anmeldenummer: PCT/EP2020/062920
(87) Internationale Veröffentlichungsnummer: WO 2020/229359

(56) Entgegenhaltungen:
- DE-A1-102011 113 747
- FR-A1- 2 873 634
- FR-A1- 2 920 713
- US-A1- 2002 033 627

## Beschreibung

Die Erfindung betrifft einen Einstellbeschlag für einen Fahrzeugsitz sowie einen Fahrzeugsitz.

Die DE 103 56 614 A1 offenbart einen Sitz mit einem Sitzteil und mit einer Lehne, wobei die Lehne gegenüber dem Sitzteil von einer ersten Position in eine zweite Position drehbar und gegenüber dem Sitzteil entriegelbar und zumindest in einer der Positionen verriegelbar ist, wobei weiterhin der Sitz einen Motor aufweist und wobei mittels des Motors sowohl das Entriegeln der Lehne gegenüber dem Sitzteil als auch das Drehen der Lehne von der ersten Position in die zweite Position vorgesehen ist.

Die DE 10 2006 020 751 A1 offenbart einen Verstellbeschlag für einen Fahrzeugsitz, wobei der Verstellbeschlag ein erstes Beschlagteil und ein hierzu mittels eines Getriebes um eine Drehachse drehverstellbar vorgesehenes zweites Beschlagteil aufweist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind. Die Keilsegmente weisen einen Innenradius und einen Außenradius auf, wobei der Verstellbeschlag ein Bremselement aufweist und wobei das Bremselement in radialer Richtung, ausgehend von der Drehachse, eine Ausdehnung etwa entsprechend des Außenradiusses der Keilsegmente aufweist.

Aus der DE 10 2007 017 672 A1 ist ein Fahrzeugsitz bekannt, aufweisend ein erstes Sitzteil, ein zweites Sitzteil, das gegenüber dem ersten Sitzteil verstellbar ist, einen Elektromotor zur elektromotorischen Verstellung der beiden Sitzteile relativ zueinander und eine Verriegelungseinheitseinrichtung zur Verriegelungseinheit der Sitzteile relativ zueinander. Es ist vorgesehen, dass durch eine erste Teilbewegung des Elektromotors die Verriegelungseinheitseinrichtung entriegelbar und durch eine nachfolgende zweite Teilbewegung des Elektromotors die Sitzteile relativ zueinander verstellbar sind, der Elektromotor ein am ersten Sitzteil gelagertes Verstellmittel dreht und hierdurch eine Relativverdrehung zwischen dem Verstellmittel und dem Elektromotor erzeugt, in der ersten Teilbewegung des Elektromotors der Elektromotor um die gemeinsame Drehachse geschwenkt wird und hierdurch die Verriegelungseinheitseinrichtung entriegelt und in der zweiten Teilbewegung der Elektromotor feststeht und das Verstellmittel das zweite Sitzteil verstellt.

Die DE 10 2009 038 735 A1 offenbart eine Verstelleinrichtung für eine Fahrzeugkomponente, insbesondere für die Rückenlehne eines Fahrzeugsitzes, mit einem ersten Beschlagteil und einem zweiten Beschlagteil, die entlang einer Drehachse angeordnet sind, wobei die relative Lage der beiden Beschlagteile zueinander mittels eines Exzenters veränderbar ist, der ein Drehmoment von einem Antrieb auf das erste Beschlagteil überträgt, so dass dieses an dem zweiten Beschlagteil abrollt und der Exzenter zwei Exzentermittel umfasst, die von einem Mitnehmer, der an dem Antrieb angeordnet ist, antreibbar sind und der Exzenter ein Federmittel umfasst, das zwischen den beiden Exzentermitteln wirkt. Ein Bremsmittel verhindert eine Selbstverstellung der Verstellvorrichtung. Das Bremsmittel wirkt mit einem Vorsprung an dem ersten Beschlagteil zusammen, dessen Mittelachse sich parallel zu der Drehachse der Vorrichtung erstreckt.

Die WO 2012/065721 A1 offenbart eine Verstellvorrichtung für eine Fahrzeugkomponente, mit einem ersten Beschlagteil und einem zweiten Beschlagteil, die entlang einer Drehachse angeordnet sind, wobei die relative Lage der beiden Beschlagteile zueinander mittels eines Exzenters veränderbar ist, der ein Drehmoment von einem Antrieb auf ein Zahnrad überträgt, so dass dieses an dem zweiten Beschlagteil abrollt und der vorzugsweise zwei Exzentermittel umfasst, wobei die Verstellvorrichtung ein Bremsmittel aufweist, das deren Selbstverstellung zumindest weitgehend verhindert, wobei das Bremsmittel mit einer Verriegelungskontur, die an dem Zahnrad vorgesehen ist, zusammenwirkt.

Aus dem Stand der Technik sind Einstellbeschläge für Fahrzeugsitze, insbesondere Lehneneinsteller, bekannt. Aus dem Stand der Technik bekannte Lehneneinsteller sind für die Einstellung eines Rückenlehnenwinkels in einem relativ kleinen Komfort-Einstellbereich um eine Designposition herum entwickelt und optimiert. Eine elektrische Einstellfunktion, die aufgrund eines bei neu zu entwickelnden Fahrzeugen immer kleiner werdenden Bauraums zwischen dem Fahrzeugsitz und einer B-Säule der Fahrzeuge und der damit erschwerten Zugänglichkeit eines Handrades zur Betätigung des Lehneneinstellers immer häufiger zur Anwendung kommt, ist für die Einstellung durch den Bediener durch Betätigen eines entsprechenden elektrischen Schalters ausgelegt. Dabei muss die Einstellgeschwindigkeit so gering gehalten werden, dass der Sitzinsasse mit seiner ihm zur Verfügung stehenden Reaktionsgeschwindigkeit in der Lage ist, einen angestrebten Rückenlehnenwinkel einzustellen, ohne den Rückenlehnenwinkel mehrmals korrigierend vor und zurück zu verstellen.

Angesichts ständig steigender Komfortbedürfnisse werden vermehrt auch Rückenlehnen von Rücksitzanlagen elektrifiziert, wobei diese zusätzlich zur Darstellung eines größeren Ladevolumens komplett nach vorn oder hinten verstellt werden können, vorzugsweise elektrisch per Fernbedienung oder Handy-App und mit deutlich höherer Geschwindigkeit als bei reinen Komforteinstellungen.

Die parallel stattfindende Weiterentwicklung autonom fahrender Fahrzeuge erfordert des Weiteren einen erweiterten Einstellbereich des von einem Fahrzeuglenker als Insassen genutzten Fahrzeugsitzes, um den Komfort für den nicht mehr ständig lenkenden Fahrzeuglenker auch nutzbar machen zu können. Dies bedeutet bei gleichzeitig beizubehaltender Insassensicherheit im Falle eines Unfalls, dass der Sicherheitsgurt komplett mit dem Sitz verfahren werden muss, um auch bei weit nach hinten gestellten Sitzen oder Rückenlehnen nah an dem Insassen anzuliegen.

Derartige Gurtsysteme, deren Schultergurt somit nicht mehr karosseriefest an der Säule befestigt ist, sondern im oberen Bereich der Rückenlehne, führen zu signifikant höheren Lasten im Lehneneinsteller (Einstellbeschlag) und erfordern folglich bei gleichem mechanischen Grundprinzip mehr Bauraum und mehr Gewicht als aus dem Stand der Technik bekannte Lehneneinsteller.

DE 10 2011 113 747 A1 beschreibt ein Beschlagsystem für einen Fahrzeugsitz, insbesondere einen Kraftfahrzeugsitz, mit wenigstens einem Beschlag, welcher ein erstes Beschlagteil und ein zweites Beschlagteil aufweist, die miteinander verriegelbar und relativ zueinander um eine Achse verdrehbar sind, einer Übertragungsstange, deren Drehung den Beschlag entriegelt, wenigstens einem Bedienelement, dessen Betätigung die Drehung der Übertragungsstange bewirkt, wobei ein Getriebemodul vorgesehen ist, welches als eine vormontierte Baueinheit ausgebildet ist, welches die Drehung der Beschlagteile und die Drehung der Übertragungsstange voneinander entkoppelt, und welches vom manuell betätigten Bedienelement mechanisch angesteuert auf den wenigstens einen Beschlag einwirkt.

Der Erfindung liegt die Aufgabe zu Grunde, einen Einstellbeschlag für hohe Lasten und einen Fahrzeugsitz mit einem solchen Einstellbeschlag bereitzustellen.

Die Aufgabe wird erfindungsgemäß gelöst durch einen Einstellbeschlag mit den im Patentanspruch 1 angegebenen Merkmalen. Hinsichtlich des Fahrzeugsitzes wird die Aufgabe erfindungsgemäß durch die im Patentanspruch 9 angegebenen Merkmale gelöst.

Aus den zuvor beschriebenen neuen Randbedingungen für eine elektrische Einstellung des Rückenlehnenwinkels ergeben sich verglichen mit aus dem Stand der Technik bekannten Einstellbeschlägen neue technische Anforderungen. Zum Einen führt die Anforderung einer sehr schnellen und gleichzeitig ein exzellentes akustisches Verhalten aufweisenden Einstellfunktion dazu, dass aus dem Stand der Technik bekannte Taumelgetriebe, die systembedingt Drehmomentschwankungen aufweisen, sehr nachteilig sind. Kombiniert mit der gleichzeitigen Anforderung einer deutlich häufigeren Änderung des Rückenlehnenwinkels und der damit verbundenen, höheren Lebensdaueranforderung kommen ebenso aus dem Stand der Technik bekannte Verzahnungsgeometrien und Lagerkonzepte an physikalisch kaum noch überwindbare Grenzen. Darüber hinaus müssen heutige Taumelgetriebe und deren in Eingriff stehende Verzahnungen nicht nur für den Einstellprozess, sondern gleichzeitig für eine hohe Lastaufnahme im Crashfall ausgelegt sein, was zu erheblichen Kompromissen bei der Entwicklung der Zahngeometrien führt. Die sich daraus ergebende Aufgabe, aufgrund der Gurtintegration nochmals dramatisch höhere Lasten aufnehmen zu müssen, führt bei der Verzahnungs- und Lagerauslegung zu so großen Zielkonflikten, dass zwingend andere Wirkprinzipien in Betracht gezogen werden müssen, um nicht letztlich ein zu teures, großes und schweres Produkt zu generieren.

Die Aufgabe wird daher erfindungsgemäß mit einem Einstellbeschlag für einen Fahrzeugsitz, insbesondere zum Einstellen einer Neigung einer Rückenlehne des Fahrzeugsitzes, gelöst, wobei der Einstellbeschlag ein erstes Beschlagteil, welches insbesondere mit einem Sitzunterbau des Fahrzeugsitzes verbindbar ist, und ein um eine Achse relativ zum ersten Beschlagteil schwenkbares zweites Beschlagteil umfasst, welches insbesondere mit einer Rückenlehne des Fahrzeugsitzes verbindbar ist, und wobei das erste Beschlagteil und das zweite Beschlagteil sowohl Bestandteile einer Getriebeeinheit, zum Beispiel eines Planetengetriebes, des Einstellbeschlags als auch einer Verriegelungseinheit des Einstellbeschlags sind.

Eine Weiterbildung sieht vor, dass sowohl die Getriebeeinheit als auch die Verriegelungseinheit eingerichtet sind, sowohl im ersten Beschlagteil als auch im zweiten Beschlagteil in Eingriff zu gelangen. Ein weiterer Aspekt sieht vor, dass ein Steuermechanismus vorgesehen und derart eingerichtet ist, dass der Eingriff der Getriebeeinheit und der Verriegelungseinheit in einer Verriegelungsposition zentrisch erfolgt. Insbesondere umfasst die Getriebeeinheit den Steuermechanismus, der mit der Getriebeeinheit und mit der Verriegelungseinheit gekoppelt ist, dass in einer Verriegelungsposition des Einstellbeschlags sowohl ein Eingriff der Getriebeeinheit als auch ein Eingriff der Verriegelungseinheit in die Beschlagteile, insbesondere zentrisch, erfolgt. Der Steuermechanismus ist beispielsweise als ein auf einem Übertragungselement angeordnetes Steuerelement, insbesondere ein Steuerhohlzylinder oder eine Steuerscheibe mit einer entsprechenden Steueraußenkontur und einer Halteinnenkontur, ausgebildet. Das Steuerelement weist dabei einen Mittelpunkt auf. Die Steueraußenkontur weist insbesondere eine Nockenkontur für eine radiale Fixierung auf. Alternativ kann das Steuerelement als ein Exzenter ausgebildet sein.

Beispielsweise ist die Verriegelungseinheit als eine 3-Riegel-Anordnung ausgebildet, wobei die drei Riegel mittels des Steuermechanismus, insbesondere der Steueraußenkontur, zentrisch in dem ersten und zweiten Beschlagteil verriegelt werden. Insbesondere ist der Steuermechanismus derart eingerichtet und mit den Hebeln bewegungsgekoppelt, dass zwei der drei Riegel zur Spielfreistellung gespannt in die Verriegelungsposition einfallen und dort gehalten werden. Hierzu sind zwei der Riegel mittels einer Lagefeder in entgegensetzte Richtung zueinander spannbar gehalten. Der Steuermechanismus, insbesondere ein Teilbereich der Steueraußenkontur, ist derart ausgebildet, dass dieser die Riegel in der Verriegelungsposition fixiert.

Darüber hinaus ist der Steuermechanismus, insbesondere ein weiterer Teilbereich der Steueraußenkontur, derart ausgebildet, dass dieser, bei einer Betätigung durch den Antrieb sowohl bei einer Bewegung in Uhrzeigerrichtung als auch bei einer Bewegung entgegen der Uhrzeigerrichtung, einen Entriegelungsmechanismus für die Verriegelungseinheit betätigt. Beispielsweise ist der Entriegelungsmechanismus derart ausgebildet oder eingerichtet, dass dieser, bei einer Bewegung des Steuerungsmechanismus durch den Antrieb aus der Verriegelungsposition heraus sowohl in Uhrzeigerrichtung als auch entgegen der Uhrzeigerrichtung, die Verriegelungseinheit, insbesondere die Riegel, freigibt. Hierbei wird der Einstellbeschlag entriegelt oder geöffnet und kann verstellt werden. Hierzu sind der Steuerungsmechanismus und der Entriegelungsmechanismus entsprechend bewegungsgekoppelt, so dass bei einer Betätigung des Steuerungsmechanismus durch den Antrieb sowohl bei einer Bewegung in Uhrzeigerrichtung als auch bei einer Bewegung entgegen der Uhrzeigerrichtung zunächst der Entriegelungsmechanismus betätigt wird und die Verriegelungseinheit freigibt, um den Einstellbeschlag zu entriegeln und verstellen zu können. Der Entriegelungsmechanismus ist beispielsweise scheibenförmig mit mindestens einer oder mehreren Entriegelungskontur/en ausgebildet. Die Entriegelungskontur/en kann bzw. können dabei als Innen- und/oder Außenkonturen ausgebildet sein. Ein solcher Entriegelungsmechanismus mit entsprechenden Entriegelungskonturen wird auch als Spielführung oder Schieber bezeichnet.

Dabei sind die Getriebeeinheit und die Verriegelungseinheit separat voneinander ausgebildet und miteinander bewegungsgekoppelt.

Dadurch, dass die Getriebeeinheit und die Verriegelungseinheit separat voneinander ausgebildet sind, sind deren Funktionen voneinander getrennt und können entsprechend optimiert ausgelegt werden. Dies ermöglicht in einfacher Art und Weise eine Auslegung der Verriegelungseinheit derart, dass ein Öffnen des Einstellbeschlags aus einer Verriegelungsposition heraus in beide Richtungen sowie eine optimale Lastverteilung in der Verriegelungsposition ermöglicht sind. Darüber hinaus wird das Halten in einer eingestellten Verriegelungsposition sowohl mittels der Verriegelungseinheit als auch der Getriebeeinheit bewirkt. Hierdurch sind höhere Halte- und Verriegelungseinheitslasten ermöglicht.

Erfindungsgemäß ist vorgesehen, dass das erste Beschlagteil mindestens eine erste Innenverzahnung und das zweite Beschlagteil mindestens eine zweite Innenverzahnung aufweisen, wobei sowohl die Getriebeeinheit als auch die Verriegelungseinheit eingerichtet sind, sowohl mit der ersten Innenverzahnung als auch mit der zweiten Innenverzahnung in Eingriff zu gelangen. Eine solche Auslegung des Einstellbeschlags insbesondere in seiner Verriegelungsposition ermöglicht eine hohe Crashlastaufnahme bei geringem Bauraum. Dabei können die Getriebeeinheit und die Verriegelungseinheit jeweils zwei separate Verzahnungsstufen aufweisen. Auch können die Verriegelungseinheit und die Getriebeeinheit jeweils unterschiedliche Verzahnungen in den Zahnstufen oder Zahnkränzen, beispielsweise nicht zwei, sondern vier Zahnstufen für vier Hohlradverzahnungen, und damit in jeder Zahnstufe oder jedem Zahnkranz wiederum zwei Stufen, aufweisen. Eine weitere Ausführungsform sieht vor, dass die Hohlrad- oder Innenverzahnungen der Beschlagteile radial versetzt sind. Hierzu sind dann die Zahnstufen oder Zahnkränze der Verriegelungseinheit und der Getriebeeinheit analog radial versetzt.

Die Riegel der Verriegelungseinheit sind insbesondere derart eingerichtet, dass Zahnsegmente über einen großen Segmentwinkel in der Verriegelungsposition in Eingriff mit den Beschlagteilen gelangen, so dass große Kräfte aufgenommen werden können.

Die Getriebeeinheit ist insbesondere eingerichtet, um beim Verstellen der Rückenlehne einen guten Wirkungsgrad und ein gutes Laufverhalten zu erzielen.

In einer möglichen Ausführungsform umfasst die beispielsweise als ein Planetengetriebe ausgebildete Getriebeeinheit zumindest einen Träger, eine Riegelführung, Zahnräder, insbesondere Planeten, und zugehörige Lagerbolzen sowie den Steuermechanismus. Das erste Beschlagteil und das zweite Beschlagteil können dabei jeweils als ein Hohlrad der Getriebeeinheit, insbesondere des Planetengetriebes, wirken.

In einer möglichen Ausführungsform umfasst die Verriegelungseinheit zumindest eine Entriegelungseinheit, eine Anzahl von Riegeln und eine Anzahl von Spielfreistellungselementen, wie Hebeln. Unter einer Verriegelungseinheit ist insbesondere eine Verriegelung zwischen wenigstens einem radial geführten Riegel und einer Gegenverzahnung zu verstehen. Das erste Beschlagteil und das zweite Beschlagteil können dabei jeweils als ein Hohlrad für die Verriegelungseinheit wirken.

Eine weitere Ausführungsform sieht vor, dass die Rückenlehne bei geöffneter Verriegelungseinheit mittels der Getriebeeinheit mit dem Sitzunterbau gekoppelt ist, beispielsweise im Zahneingriff steht. Im Unterschied zu üblicherweise in Reihe geschalteten Getriebe-Raster-Lösungen mit Raster zur Schnellverstellung ist bei der hier vorgestellten Lösung beim Öffnen der Verriegelungseinheit die Rückenlehne somit nicht frei, sondern weiterhin über die Getriebeeinheit mit dem Sitzunterbau verbunden.

Ein weiterer Aspekt sieht einen direkten Antrieb des Einstellbeschlages vor. Beispielsweise kann der Einstellbeschlag durch einen direkten Antrieb gekennzeichnet sein, der mit der Getriebeeinheit gekoppelt ist. Dabei ist der Antrieb permanent mit der Getriebeeinheit gekoppelt. Beispielsweise erfolgt ein solcher direkter Antrieb über ein Übertragungsrohr, mit dem ein Antriebsmoment von einem Motor auf den Steuermechanismus übertragen wird. Insbesondere ist das Planetengetriebe direkt mit dem Motor, insbesondere dessen Übertragungselement gekoppelt. Eine solche Ausgestaltung des Einstellbeschlags ermöglicht eine Schnellverstellung der Rückenlehne und den Einsatz nur einer einzigen Antriebseinheit.

Die Auslegung des Einstellbeschlags, insbesondere der Verriegelungseinheit, darüber hinaus mit einer Öffnungsbewegung in beide Drehrichtungen, ohne dass ein separates Bauteil als Aktuator zum Zurückziehen der Zahnsegmente in immer eine Drehrichtung benötigt wird, ermöglicht, dass die Verstellung in eine gewünschte Drehrichtung der Rückenlehne motorisch angetrieben werden kann.

Eine Weiterbildung sieht vor, dass die Spielfreistellungselemente, insbesondere die Hebel, eine Spannkontur und die Riegel einen Nocken aufweisen, die derart in Wirkeingriff gelangen, dass eine Spielfreistellung ermöglicht ist. In einer möglichen Ausführungsform können dabei durch die Drehbewegung des Antriebs in beide Richtungen zuerst die Spielfreistellungselemente, wie zum Beispiel die Hebel, mit Spannkontur zusammengezogen werden, so dass die Riegel entriegelt werden, wobei mit gleicher weiterer Drehbewegung in gleiche Drehrichtung anschließend die Zahnräder, insbesondere die Planeten, angetrieben und die Rückenlehne bewegt, insbesondere verstellt wird.

Durch spezielle geometrische Gestaltung der Zähne der Zahnsegmente und der (gespiegelten) Lage der Zahnsegmente zueinander werden beim zuvor beschriebenen Einstellbeschlag die Zahnsegmente der Riegel zur kompletten Spielfreistellung des Einstellbeschlags verwendet. Fertigungstoleranzen werden dabei durch Spannkonturen an den im Planetenträger gelagerten, federvorgespannten Hebeln durch unterschiedlich tiefen Einfall der Zahnsegmente in Kombination mit ihrer Bewegung in Umfangsrichtung entsprechend der Lage der Zahnkränze der Beschlagteile ausgeglichen, ohne dass der lehnenfeste Zahnkranz des lehnenfesten Beschlagteils sich relativ zum sitzfesten Zahnkranz des sitzfesten Beschlagteils bewegen muss, d. h. die Verstellung ist stufenlos.

Beispielsweise umfasst die Verriegelungseinheit eine Anzahl von Riegel, die jeweils mindestens zwei Radialzahnkränze aufweisen, die axial nebeneinander angeordnet sind. Die Radialzahnkränze können dabei eine gleiche Anzahl von Zähnen aufweisen. Alternativ können die Radialzahnkränze eines Riegels unterschiedlich viele Zähne aufweisen. Beispielsweise umfasst der Radialzahnkranz des jeweiligen Riegels zur Verzahnung mit der ersten Innenverzahnung des ersten Beschlagteils mehr Zähne als der Radialzahnkranz zur Verzahnung mit der zweiten Innenverzahnung des zweiten Beschlagteils oder umgekehrt.

Insbesondere umfasst der jeweilige Riegel einen ersten Radialzahnkranz, der in der Verriegelungsposition des Einstellbeschlags mit der ersten Innenverzahnung in Eingriff gelangt, und einen zweiten Radialzahnkranz, der in der Verriegelungsposition des Einstellbeschlags mit der zweiten Innenverzahnung in Eingriff gelangt.

Dabei können die Radialzahnkränze des jeweiligen Riegels derart eingerichtet sein, dass in der Verriegelungsposition des Einstellbeschlags jeweils nur ein Zahn oder eine Mehrzahl, insbesondere einige wenige Zähne, zum Beispiel zwei oder drei Zähne, des jeweiligen Radialzahnkranzes im eingefallenen Zustand mit der zugehörigen Innenverzahnung in Eingriff gelangt.

Darüber hinaus können alle Zahnköpfe der Radialzahnkränze des jeweiligen Riegels derart eingerichtet sein, dass diese dieselben Kopfabstände aufweisen, wie die Hohlradverzahnung, insbesondere die Innenverzahnungen der Beschlagteile, um den Eingriff oder Einfall in diese zu ermöglichen. Alternativ können die Kopfabstände der Zähne des jeweiligen Radialzahnkranzes unterschiedlich groß ausgebildet sein. Beispielsweise können die Kopfabstände zwischen den Zähnen des jeweiligen Radialzahnkranzes von einer Mittellinie des betreffenden Riegels gesehen nach außen abnehmen. Mit anderen Worten: Die Kopfabstände zwischen den Zähnen werden ausgehend von der Mittellinie zu der jeweiligen Außenseite kleiner.

Des Weiteren kann zur Positionierung der Riegel zueinander und zur Führung der Riegel aus der Verriegelungsposition in eine mittige Ausgangs- oder Offenstellung (auch Reset genannt) eine federvorgespannte Riegelführung (auch segment guide genannt) vorgesehen sein. Durch eine solche Positionierung der Riegel zueinander während des Einfallens der Riegel in die Verriegelungsposition, insbesondere eine ermöglichte Riegelbewegung in Umfangsrichtung verbunden mit einer tangentialen Kraftkomponente der Spielfreistellungselemente und des Steuermechanismus, ist eine mögliche Kopf-auf-Kopfstellung vermieden.

Ein weiterer Aspekt sieht eine Riegelführung zur Steuerung der Einfallbewegung der Riegel vor. Die Riegelführung ist derart eingerichtet, dass die Riegel radial und/oder tangential beweglich geführt sind. Insbesondere sind die Riegel mittels der Riegelführung ohne Verkippen, aber mit relativer Radial- und/oder Tangentialbewegbarkeit zwangsgeführt. Hierdurch ist eine Vorpositionierung vor dem Einfallen der Riegel in die Verriegelungsposition ermöglicht. Die Riegelführung ist beispielsweise ring- oder scheibenförmig ausgebildet. Die Riegelführung umfasst insbesondere je Riegel eine Radialführung, insbesondere eine radial verlaufende Nut oder einen radial verlaufenden Slot. Dabei sind die Riegel mittels Befestigungselementen, insbesondere Bügelfedern oder Klammern, radial und/oder tangential beweglich an der Riegelführung gehalten. Die Riegelführung kann dabei zur Begrenzung der radialen und/oder tangentialen Bewegung der Riegel eine Innenkontur aufweisen. Die Innenkontur ist insbesondere korrespondierend zur Form, Größe und/oder den Abmessungen der Riegel ausgebildet. Die Innenkontur weist insbesondere eine geringfügig größere Form und/oder geringfügig größere Abmessungen als die Form bzw. die Abmessungen der Riegel auf.

Zur Positionierung der Riegel zueinander umfasst die Riegelführung mindestens eine Lagefeder und/oder ein Spannelement. Beispielsweise umfasst die Riegelführung ein integriertes Spannelement mit Federarmen, mittels welcher die Riegel in entgegengesetzte Richtung zueinander spannbar gehalten sind. Alternativ können oder kann die Lagefeder und/oder das Spannelement separat ausgebildet sein.

Die Aufgabe wird zudem gelöst durch einen Fahrzeugsitz mit einem erfindungsgemäßen Einstellbeschlag. Ein solcher Fahrzeugsitz kann hohe Lasten von einer Rückenlehne über den Beschlag in einen Sitzunterbau ableiten und dennoch verglichen mit aus dem Stand der Technik bekannten Fahrzeugsitzen leichter und kostengünstiger sein. Der Fahrzeugsitz kann ein integriertes Gurtsystem aufweisen. Ein erfindungsgemäßer Beschlag ist vorzugsweise auf der Sitzseite angeordnet, auf der auch ein Gurtaustritt eines Gurtbandes des Gurtsystems aus der Rückenlehne erfolgt. Auf der anderen Seite des Fahrzeugsitzes kann ein aus dem Stand der Technik bekanntes Drehlager, ein aus dem Stand der Technik bekannter Beschlag oder ein weiterer erfindungsgemäßer Einstellbeschlag angeordnet sein.

Zusammenfassend und mit anderen Worten ausgedrückt liegt die Erfindung insbesondere in der Trennung der Gesamtaufgabe "exzellente Einstellfunktion bei gleichzeitig erhöhter Lastaufnahme" in unterschiedliche Bereiche bzw. Wirkprinzipien, die innerhalb des Produktes gleichzeitig und parallel wirkend jeweils eine der Anforderungen optimal erfüllen. Für die Funktion "häufige, akustisch gute Einstellung" haben sich klassische, im Wesentlichen symmetrisch aufgebaute Planetengetriebe in vielen Einstellsystemen, auch innerhalb von Fahrzeugsitzen, bereits bewährt. Insbesondere für Einstellfunktionen mit eher moderaten Crashlastanforderungen, wie Sitzkissenneigungseinstellern und dergleichen, werden derartige Planetengetriebe verwendet. Für die Funktion "hohe Crashlastaufnahme bei geringem Bauraum" hingegen sind aus dem Stand der Technik bekannte mit Rastverriegelungen ausgestattete Rastbeschläge (Rastlehneneinsteller bzw. "Lever Recliner") hervorragend geeignet, die mit ihren auf Lastaufnahme optimierten Zahnkränzen, Zahnsegmenten, wie Riegel, und Zahnsegmentführungen, wie Riegelführungen, bei akzeptabler Stufigkeit in vergleichsweise geringem Bauraum und mit geringem Gewicht eine gute Wahl für die Lastaufnahme in Gurtintegralsitzen darstellen.

Die Erfindung kombiniert diese beiden bekannten Wirkprinzipen und lässt für die jeweils vorliegende Funktion während des Gebrauchs den einen und/oder den anderen Mechanismus optimal zur Wirkung kommen, wobei durch geschickte Konzeption und Konstruktion diverse Einzelteile in beiden Mechanismen gleichzeitig verwendet werden können und somit der Gesamtaufwand geringer ist als die Summe der Einzelaufwendungen für die beiden Mechanismen.

Der Einstellbeschlag weist eine einfache Auslösungs- und Verriegelungssequenz auf, wonach ein Motor mittels eines Übertragungselements direkt mit dem Steuermechanismus des Einstellbeschlags bewegungsgekoppelt ist. Der Steuermechanismus weist beispielsweise mindestens einen Steuernocken auf, insbesondere eine Außenkontur und/oder Vorsprünge, insbesondere nockenförmige Konturen und/oder Vorsprünge, die mit den Spielfreistellungselementen, insbesondere mit einer keilförmigen Kontur, wirkgekoppelt sind, so dass die Spielfreistellungselemente die Verriegelungseinheit, insbesondere die Riegel, in die Verriegelungsposition bewegen und dort halten oder blocken, wobei der Steuermechanismus zusätzlich dazu eingerichtet ist, die Riegel in der Verriegelungsposition zu blockieren. Dazu weist der Steuermechanismus eine entsprechende Sperr- oder Blockierkontur, insbesondere abstehende Sperrnocken, auf. Zur Entriegelung der Riegel weist der Einstellbeschlag eine Entriegelungseinheit auf. Die Entriegelungseinheit ist beispielsweise scheibenförmig mit mindestens einer oder mehreren Entriegelungskontur/en ausgebildet. Die Entriegelungskontur/en kann bzw. können dabei als Innen- und/oder Außenkonturen ausgebildet sein. Die Entriegelungseinheit ist dabei derart eingerichtet und mit dem Steuermechanismus gekoppelt, dass die Entriegelungseinheit, bei Betätigung des Steuermechanismus durch den Antrieb sowohl bei einer Bewegung in Uhrzeigerrichtung als auch bei einer Bewegung entgegen der Uhrzeigerrichtung, die Verriegelungseinheit freigibt. Dabei bewegen sich die Riegel aus der Verriegelungsposition heraus und der Einstellbeschlag kann verstellt werden.

Ausführungsbeispiele der Erfindung werden anhand von Zeichnungen näher erläutert. Dabei zeigen:
- Figuren 1, 2: schematisch verschiedene Ansichten einer Explosionsdarstellung einer Ausführungsform eines Einstellbeschlags,
- Figuren 1A bis 1D und 2A bis 2D: schematisch jeweils Teilansichten der Explosionsdarstellungen nach Figuren 1 bis 2,
- Figuren 3A und 3B: schematisch verschiedene Ansichten einer Explosionsdarstellung einer Anzahl von Riegeln einer Verriegelungseinheit,
- Figur 4: schematisch eine perspektivische Ansicht für ein Ausführungsbeispiel eines Steuermechanismus,
- Figur 5: schematisch eine perspektivische Ansicht für ein Ausführungsbeispiel einer Getriebeeinheit im zusammengebauten Zustand mit einem der Beschlagteile des Einstellbeschlags,
- Figur 6: schematisch eine Ausführungsform für eine Getriebeschaltung eines Einstellbeschlags,
- Figur 7: schematisch eine Ansicht einer Lehnenseite des Einstellbeschlags ohne Gehäuseabdeckung und mit Trägerscheibe,
- Figur 8: schematisch eine weitere Ansicht auf eine lehnenfeste Seite des Einstellbeschlags ohne Gehäuseabdeckung und ohne Trägerscheibe,
- Figur 9: schematisch eine perspektivische Ansicht einer Ausführungsform für eine Riegelführung eines Einstellbeschlages,
- Figur 10: schematisch in Draufsicht eine Ausführungsform für eine kombinierte Getriebe- und Verriegelungseinheit eines Einstellbeschlags im zusammengebauten Zustand ohne Gehäuseabdeckung,
- Figur 11: schematisch eine Detailansicht eines Eingriffs eines Riegels in die Beschlagteile in der Verriegelungsposition des Einstellbeschlags,
- Figur 12: schematisch eine Schnittdarstellung eines Einstellbeschlages,
- Figur 13: schematisch in perspektivischer Darstellung einen montierten Einstellbeschlag an einem Fahrzeugsitz,
- Figuren 14A, 14B: schematisch verschiedene Ansichten einer perspektivischen Darstellung eines abgedeckten Einstellbeschlags,
- Figur 15: schematisch in Explosionsdarstellung eine alternative Ausführungsform für eine Riegelführung eines Einstellbeschlags,
- Figur 16: schematisch im teilweise zusammengebauten Zustand einen Einstellbeschlag in perspektivischer Ansicht,
- Figuren 17 und 18: schematisch zwei Ansichten eines allgemeinen Ausführungsbeispiels eines einfachen Einstellbeschlags mit separterer Getriebeeinheit und Verriegelungseinheit, und
- Figur 19: schematisch eine Ansicht eines alternativen Einstellbeschlags mit radial versetzten Verzahnungen für die Getriebeeinheit und die Verriegelungseinheit.

Einander entsprechende Teile sind in allen Figuren mit den gleichen Bezugszeichen versehen.

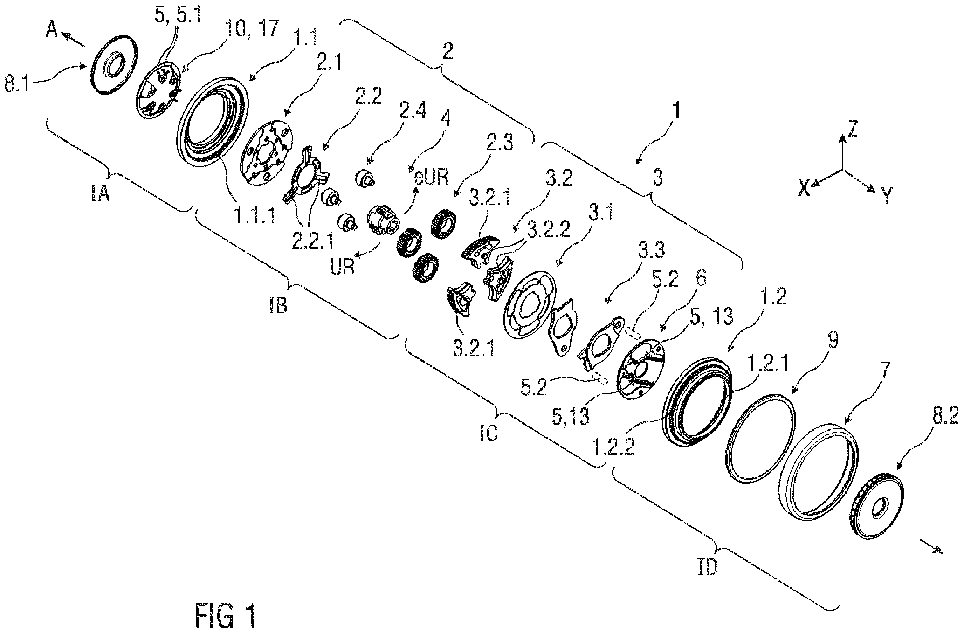

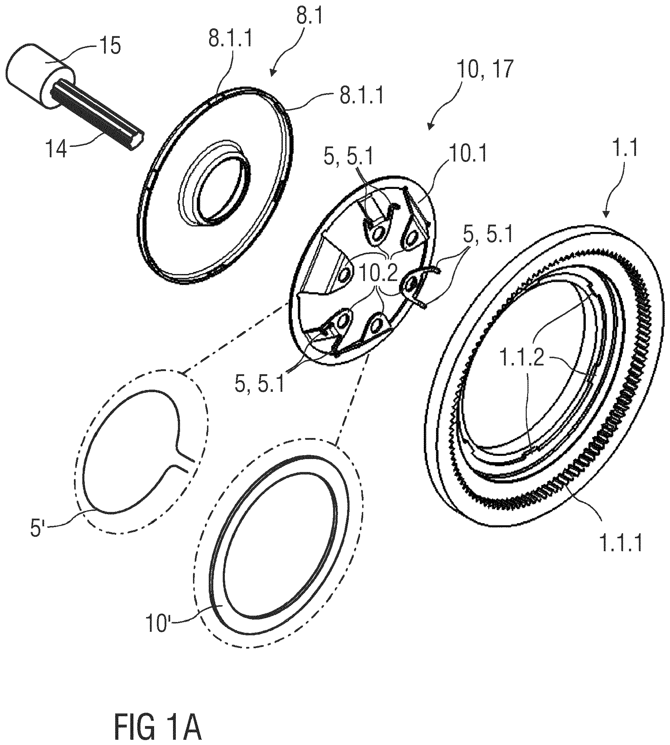

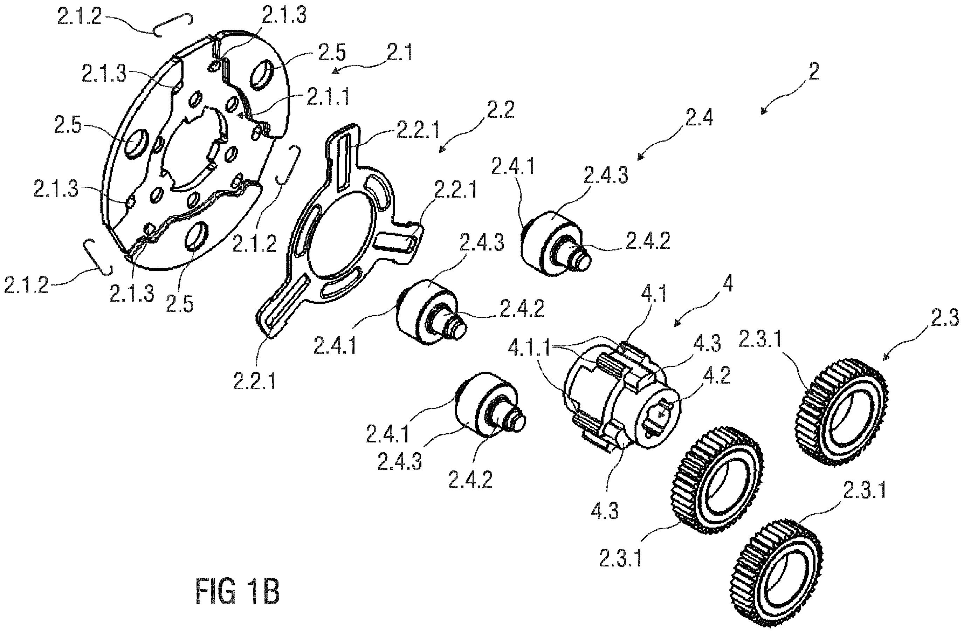

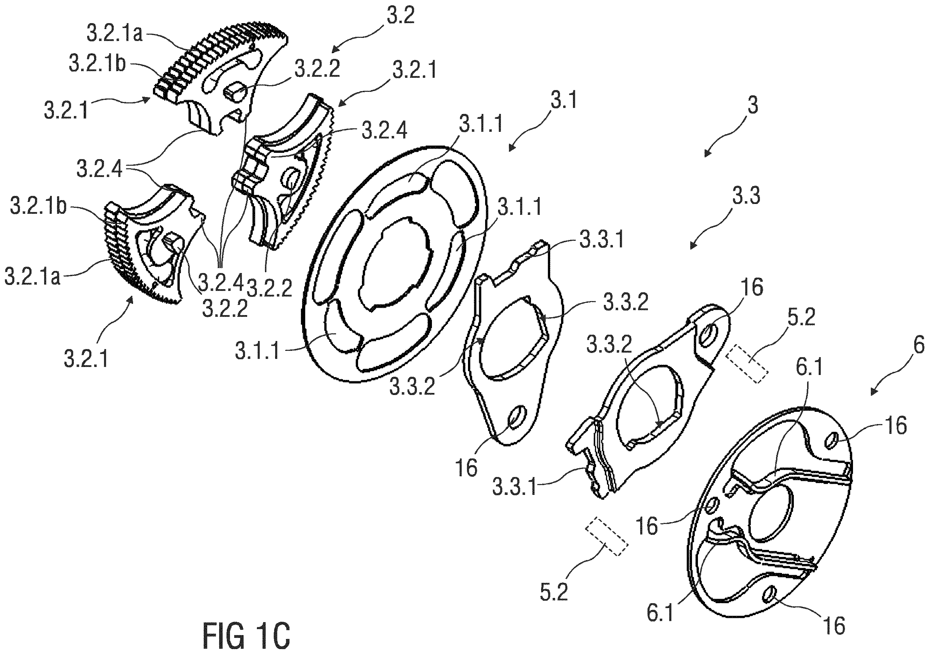

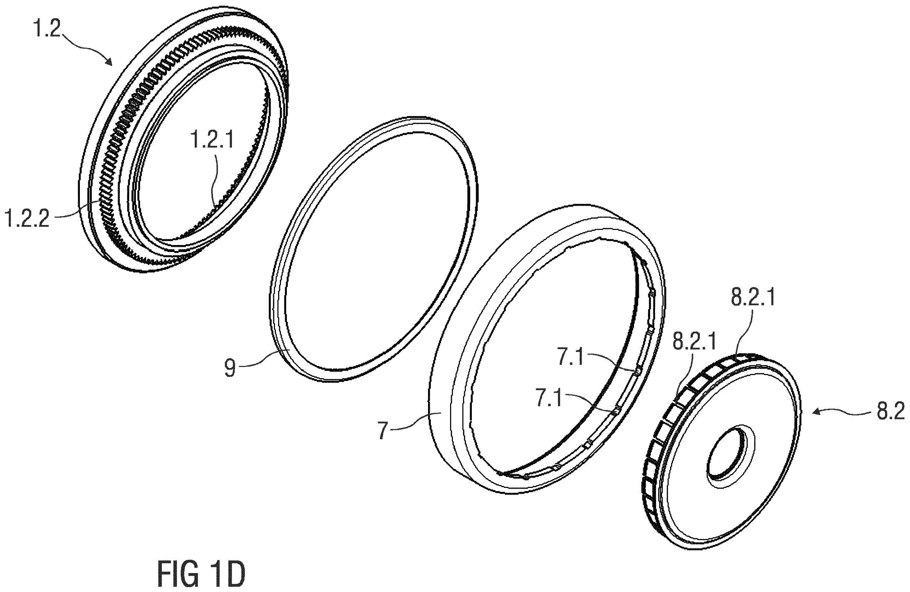

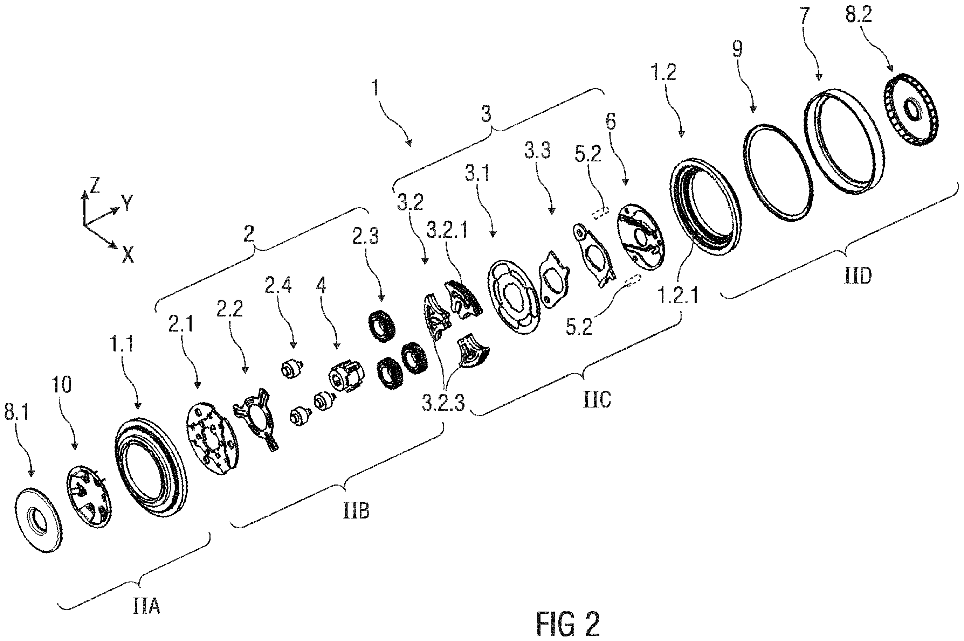

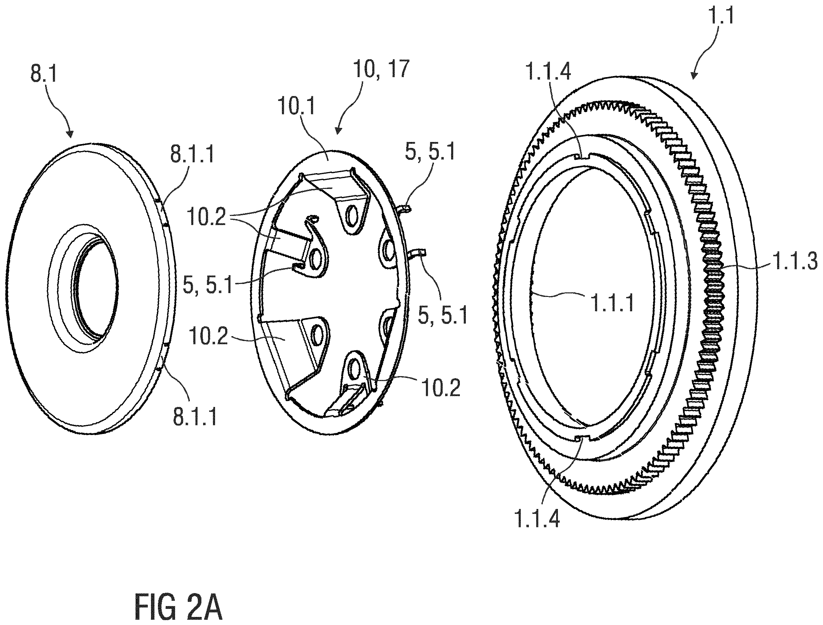

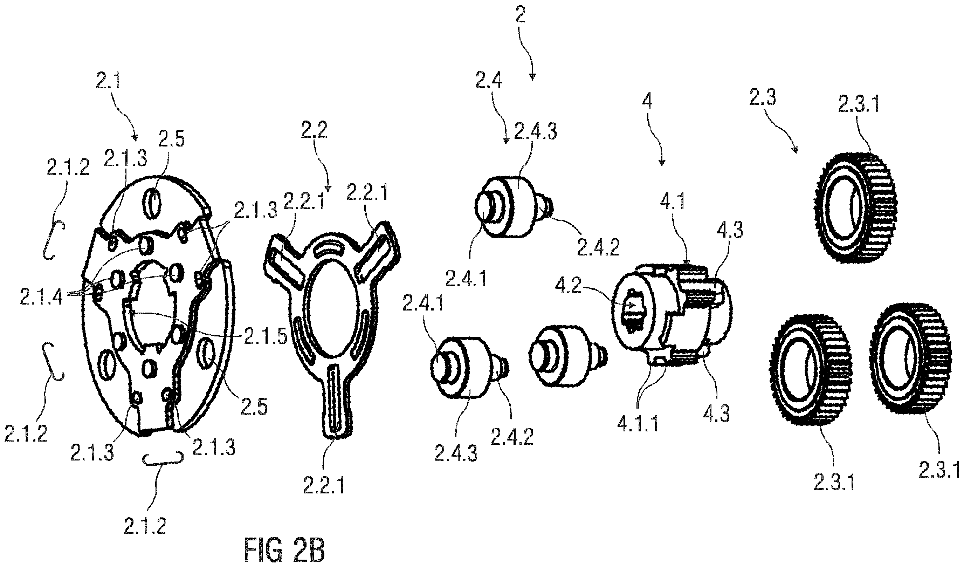

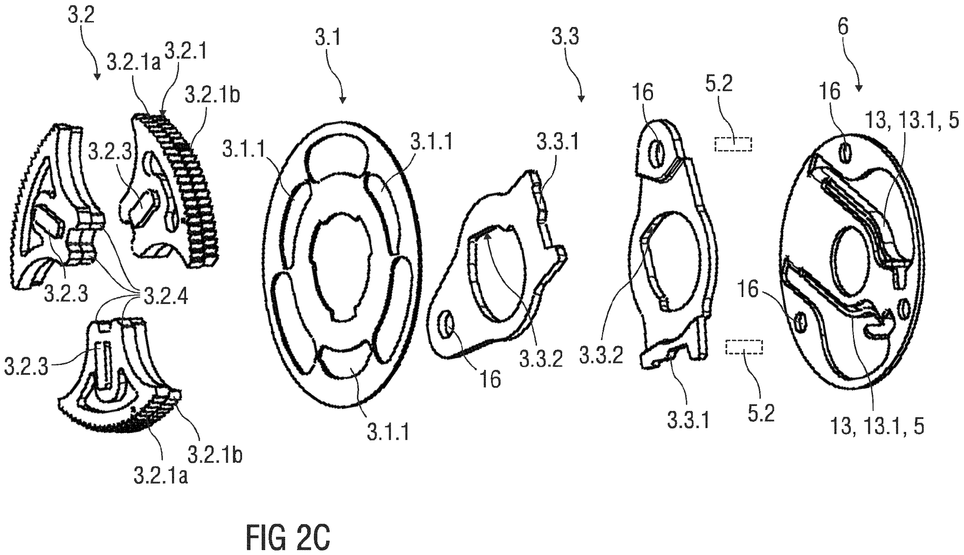

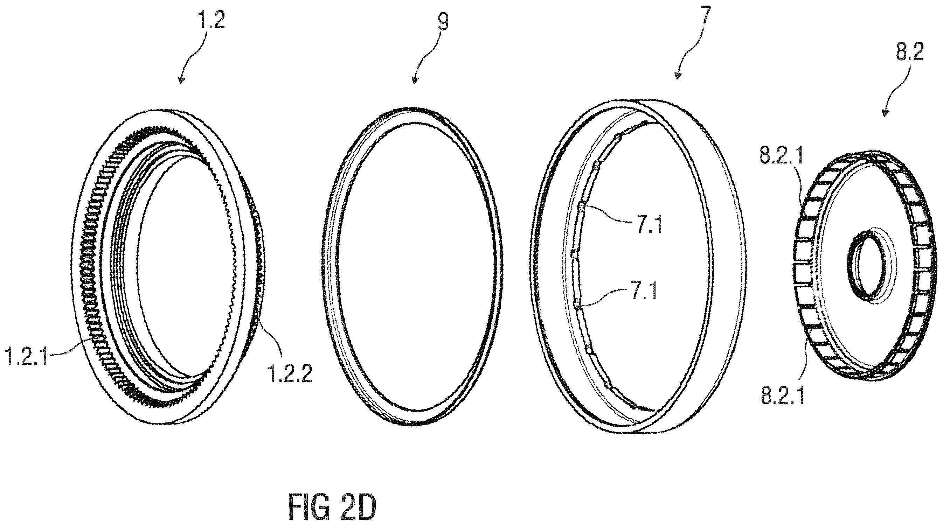

**Figuren 1** **und** **2** zeigen schematisch verschiedene Ansichten einer Explosionsdarstellung einer ersten Ausführungsform eines Einstellbeschlags 1. Der Einstellbeschlag 1 kombiniert eine als Getriebeschlag ausgebildete Getriebeeinheit 2 und eine Verriegelungseinheit 3. Zur besseren Übersichtlichkeit und für Detailansichten von Komponenten des Einstellbeschlags 1 zeigen **Figuren 1A bis 1D** und 2A bis 2D schematisch jeweils Teilansichten der Explosionsdarstellungen nach **Figuren 1 bis 2****.**

Der Einstellbeschlag 1 weist ein erstes Beschlagteil 1.1 und ein zweites Beschlagteil 1.2 auf.

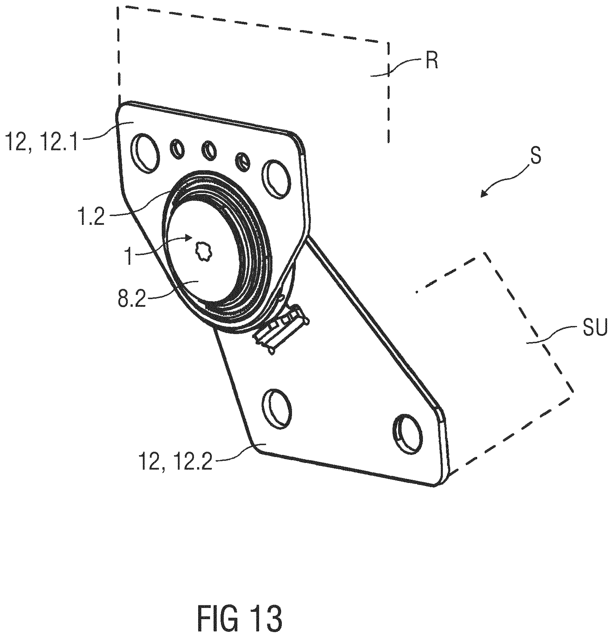

Der Einstellbeschlag 1 dient zum Einstellen einer Neigung einer Rückenlehne R eines Fahrzeugsitzes S (angedeutet in **Figur 13**).

Das erste Beschlagteil 1.1 ist mit einem Sitzunterbau SU des Fahrzeugsitzes S verbindbar (siehe **Figur 13**). Das zweite Beschlagteil 1.2 ist um eine Achse A relativ zum ersten Beschlagteil 1.1 angeordnet. Das zweite Beschlagteil 1.2 ist insbesondere mit der Rückenlehne R des Fahrzeugsitzes S verbindbar (siehe **Figur 13**).

Das erste Beschlagteil 1.1 und das zweite Beschlagteil 1.2 sind sowohl Bestandteile der Getriebeeinheit 2, zum Beispiel eines Planetengetriebes, des Einstellbeschlags 1 als auch der Verriegelungseinheit 3 des Einstellbeschlags 1.

Dabei sind sowohl die Getriebeeinheit 2 als auch die Verriegelungseinheit 3 derart eingerichtet, dass diese jeweils sowohl im ersten Beschlagteil 1.1 als auch im zweiten Beschlagteil 1.2 in Eingriff gelangen.

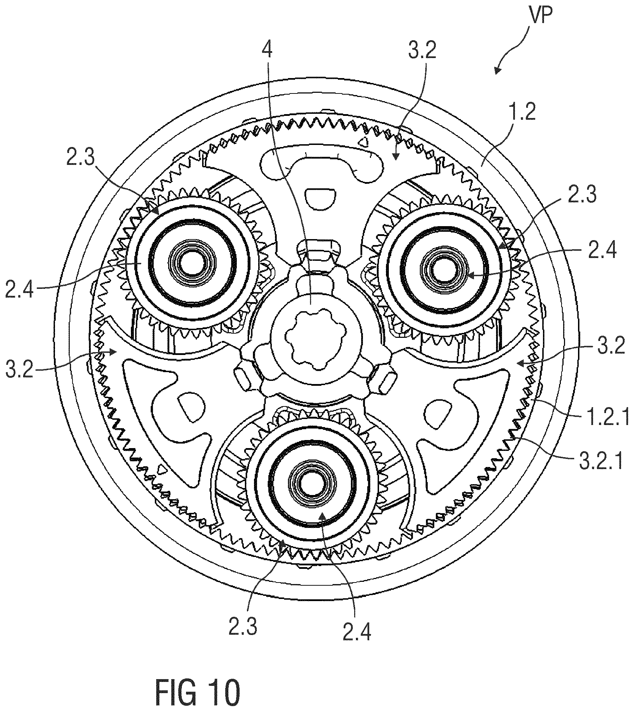

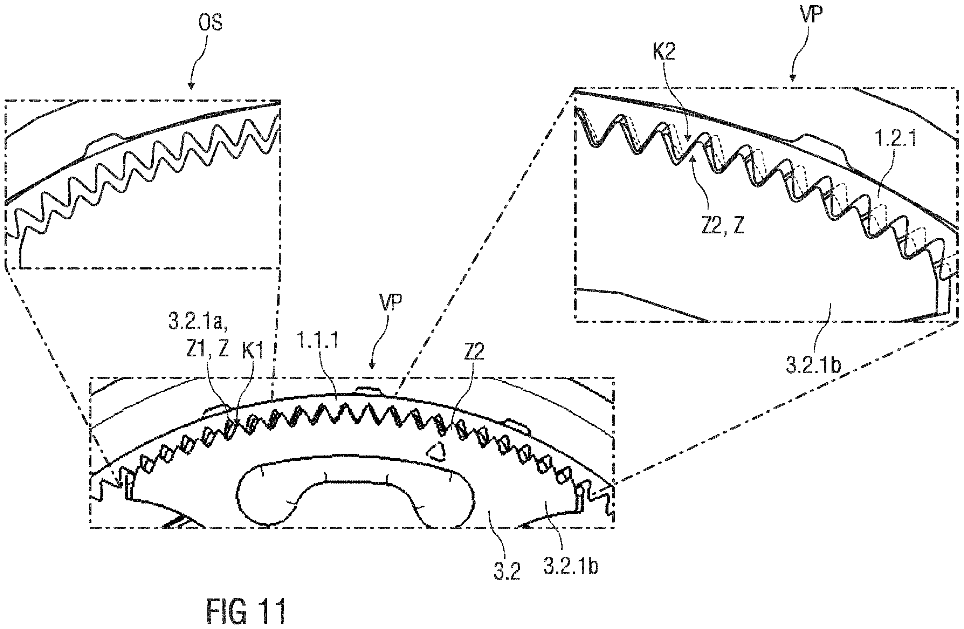

Der Einstellbeschlag 1 umfasst des Weiteren einen Steuermechanismus 4, der eingerichtet ist, dass der Eingriff der Getriebeeinheit 2 und der Verriegelungseinheit 3 in einer Verriegelungsposition VP (dargestellt in **Figuren 10****,** **11**) zentrisch erfolgt.

Dabei sind die Getriebeeinheit 2 und die Verriegelungseinheit 3 separat voneinander ausgebildet und miteinander bewegungsgekoppelt.

Dadurch, dass die Getriebeeinheit 2 und die Verriegelungseinheit 3 separat voneinander ausgebildet sind, sind deren Funktionen voneinander getrennt und können entsprechend optimiert ausgelegt werden. Dies ermöglicht in einfacher Art und Weise eine Auslegung des Einstellbeschlags 1 derart, dass dieser bei Betätigung des Steuermechanismus 4 sowohl bei einer Bewegung in Uhrzeigerrichtung UR als auch bei einer Bewegung entgegen der Uhrzeigerrichtung eUR einen Entriegelungsmechanismus, insbesondere eine Entriegelungseinheit 3.1, derart bewegt, dass dieser die Verriegelungseinheit 3 freigibt und der Einstellbeschlag 1 verstellt werden kann. Somit ist eine Entriegelung der Verriegelungseinheit 3 aus einer Verriegelungsposition VP heraus oder Verriegelung dieser in die Verriegelungsposition VP durch Bewegung des Steuermechanismus 4 bewegungsgekoppelt mit der Entriegelungseinheit 3.1 in beide Richtungen möglich. Darüber hinaus umfasst der Steuermechanismus 4 eine Sperrkontur, welche die Verriegelungseinheit 3 im Fall einer hohen mechanischen Beanspruchung, insbesondere bei einem Unfall, in der Verriegelungsposition VP sperrt. Der Steuermechanismus 4 umfasst hierzu eine entsprechende Außenkontur 4.1, insbesondere eine Sperrkontur, zum Beispiel Sperrnocken oder -vorsprünge, die in **Figur 1C** näher dargestellt sind.

Darüber hinaus sind die zwei Spielfreistellungselemente 3.3 eingerichtet, zumindest zwei der Riegel 3.2 gespannt in der Verriegelungsposition VP zu halten und zu verriegeln. Hierzu umfasst das jeweilige Spielfreistellungselement 3.3 eine ensprechende Spannkontur 3.3.1, welche in den **Figuren 1C** **und** **2C** näher dargestellt ist. Die Spannkontur 3.3.1 weist beispielsweise eine Keilform auf.

Darüber hinaus wird das Halten in einer eingestellten Verriegelungsposition VP sowohl mittels der Verriegelungseinheit 3 als auch der Getriebeeinheit 2 bewirkt. Ein solcher mehrfacher Eingriff oder Einfall von Zähnen und/oder Zahnkränzen in der Verriegelungsposition VP durch die in die Innenverzahnungen 1.1.1, 1.2.1 eingefallene Verriegelungseinheit 3 und die in den Innenverzahnungen 1.1.1, 1.2.1 abwälzende Getriebeeinheit 2 ermöglicht eine optimale Lastverteilung in der Verriegelungsposition VP. Hierdurch sind höhere Halte- und Verriegelungseinheitslasten ermöglicht.

In einer möglichen Ausführungsform umfasst die beispielsweise als ein Planetengetriebe ausgebildete Getriebeeinheit 2 zumindest einen Träger 2.1, eine Riegelführung 2.2, Zahnräder 2.3, insbesondere Planeten, und zugehörige Lagerbolzen 2.4 sowie den Steuermechanismus 4. Die Zahnräder 2.3 können mit Schmiermittelreservoirs zur Schmierung versehen sein.

In einer möglichen Ausführungsform umfasst die Verriegelungseinheit 3 zumindest eine Entriegelungseinheit 3.1, eine Anzahl von Riegeln 3.2 und eine Anzahl von Spielfreistellungselementen 3.3, wie Hebeln. Unter einer Verriegelungseinheit 3 ist insbesondere eine Verriegelung zwischen wenigstens einem radial geführten Riegel 3.2 und einer Gegenverzahnung zu verstehen.

Das erste Beschlagteil 1.1 und das zweite Beschlagteil 1.2 wirken dabei jeweils als ein Hohlrad der Verriegelungseinheit 3. Das erste Beschlagteil 1.1 und das zweite Beschlagteil 1.2 wirken darüber hinaus jeweils als ein Hohlrad der Getriebeeinheit 2.

Das erste Beschlagteil 1.1 weist insbesondere eine erste Innenverzahnung 1.1.1 auf, die eine Innenverzahnung des Hohlrades eines Planetengetriebes bildet. Das zweite Beschlagteil 1.2 weist eine zweite Innenverzahnung 1.2.1 auf, die eine Innenverzahnung des Hohlrades eines Planetengetriebes bildet. Somit bilden die Innenverzahnungen 1.1.1 und 1.2.1 der beiden Beschlagteile 1.1, 1.2 die Gegenverzahnungen für die Getriebeeinheit 2 und die Verriegelungseinheit 3.

Im Ausführungsbeispiel sind drei Zahnräder 2.3 gezeigt, die als Planeten des Planetengetriebes wirken. Die drei Zahnräder 2.3 sind jeweils auf einem von den insgesamt drei dargestellten Lagerbolzen 2.4 drehbar gelagert und stehen sowohl mit der ersten Innenverzahnung 1.1.1 als auch mit der zweiten Innenverzahnung 1.2.1 in Zahneingriff.

Die Lagerbolzen 2.4 sind am Träger 2.1 befestigt. Die Lagerbolzen 2.4 sind dabei beispielsweise um 120° zueinander um die zentrale Achse A, der Drehachse, verteilt angeordnet. Die als Hohlräder ausgebildeten Beschlagteile 1.1, 1.2 und der Träger 2.1 mit den Lagerbolzen 2.4 sowie die als Planeten wirkenden Zahnräder 2.3 bilden die Getriebeeinheit 2, die als das Planetengetriebe ausgebildet ist.

Das erste Beschlagteil 1.1 ist fest mit dem Sitzunterbau SU des Fahrzeugsitzes S verbindbar. Der Abtrieb der Getriebeeinheit 2, dessen Hohlrad fest mit dem Sitzunterbau SU verbunden ist, erfolgt mittels einer Außenverzahnung 1.2.2 des zweiten Beschlagteils 1.2.

Das zweite Beschlagteil 1.2 ist fest mit der Rückenlehne R verbindbar.

Die Innenverzahnungen 1.1.1 und 1.2.1 der beiden Beschlagteile 1.1, 1.2 bilden darüber hinaus die Gegenverzahnungen für die Verriegelungseinheit 3.

Die Riegelführung 2.2 dient als Führungsbauteil der Verriegelungseinheit 3. Die Riegelführung 2.2 umfasst hierzu Radialführungen 2.2.1. Die Riegel 3.2 weisen Führungsstifte 3.2.3 auf, die in **Figur 2C** dargestellt sind. Dabei sind drei Radialführungen 2.2.1 für die Führungsstifte 3.2.3 der drei Riegel 3.2 vorgesehen.

Die Riegel 3.2 sind mittels der Führungsstifte 3.2.3 (dargestellt in **Figuren 2****,** **2C**) jeweils, bezogen auf die Achse A, in radialer Richtung in den Radialführungen 2.2.1, zum Beispiel Slots, Nuten, Kanäle, geführt. Die Riegel 3.2 weisen darüber hinaus jeweils einen Nocken 3.2.2 (dargestellt in **Figur 1****,** **1C**) für eine Spielfreistellung auf.

Die Riegel 3.2 tragen radial außen jeweils eine Verzahnung 3.2.1. Die Verzahnung 3.2.1 ist in Axialrichtung mehrfach, insbesondere zweifach ausgebildet. Dabei ist jede Zahnkranzreihe der Riegel 3.2 in der Verriegelungsposition VP jeweils in eine der Innenverzahnungen 1.1.1 und 1.2.1 der Beschlagteile 1.1, 1.2 in Zahneingriff bringbar, so dass das erste Beschlagteil 1.1 und das zweite Beschlagteil 1.2 miteinander derart verriegelt sind, dass keine Relativdrehung um die Achse A erfolgen kann.

Die beiden Innenverzahnungen 1.1.1 und 1.2.1 können dabei unterschiedlich fein ausgebildet sein. So kann die erste Innenverzahnung 1.1.1 beispielsweise 114 Zähne aufweisen. Die zweite Innenverzahnung 1.2.1 weist beispielsweise 120 Zähne auf.

Die Verriegelungseinheit 3 ist beispielsweise als eine 3-Riegel-Anordnung ausgebildet, wobei drei Riegel 3.2 mittels des Steuermechanismus 4 zentrisch in dem ersten und zweiten Beschlagteil 1.1, 1.2 verriegelt werden. Insbesondere ist der Steuermechanismus 4 derart eingerichtet und mit den Spielfreistellungselementen 3.3, insbesondere Hebeln, bewegungsgekoppelt, dass zwei der drei Riegel 3.2 gespannt in die Verriegelungsposition VP einfallen. Hierzu sind zwei der Riegel 3.2 mittels einer Lagefeder 5 oder eines Spannelements 13 in entgegengesetzte Richtung zueinander spannbar gehalten. Die Lagefeder 5 ist beispielsweise als integraler Teil einer Trägerscheibe 6 für die Verriegelungseinheit 3 ausgebildet. Die Trägerscheibe 6 umfasst hierzu beispielsweise das Spannelement 13 mit Federarmen 13.1. In einer alternativen, nicht dargestellten Ausführungsform kann die Lagefeder separat ausgebildet und mittels Bolzen beweglich an der Trägerscheibe 6 gehalten sein.

Der Steuermechanismus 4 ist derart ausgebildet, dass dieser bei einer Bewegung aus der Verriegelungsposition VP heraus sowohl in Uhrzeigerrichtung UR als auch entgegen der Uhrzeigerrichtung eUR die Riegel 3.2 aus der Verriegelungsposition VP bewegt und somit der Einstellbeschlag 1 öffnet.

Die Riegel 3.2 sind dabei beispielsweise um 120° zueinander um die zentrale Achse A, der Drehachse, verteilt angeordnet. Die Riegel 3.2 sind dabei um 60° versetzt zu den Zahnrädern 2.3 angeordnet. Somit sind die Riegel 3.2 und die Zahnräder 2.3 im Wechsel und um 60° zueinander um die zentrale Achse A verteilt angeordnet.

Im Unterschied zu üblicherweise in Reihe geschalteten Getriebe-Raster-Lösungen mit Raster zur Schnellverstellung ist bei dem Einstellbeschlag 1 beim Öffnen der Verriegelungseinheit 3 die Rückenlehne R nicht frei, sondern weiterhin über die Getriebeeinheit 2 mit dem Sitzunterbau SU verbunden.

Der Antrieb des Einstellbeschlags 1 erfolgt direkt, wie dies beispielhaft in **Figur 1A** gezeigt ist. Beispielsweise erfolgt ein solcher direkter Antrieb über ein Übertragungsrohr 14, mit dem ein Antriebsmoment von einem Motor 5 auf den Steuermechanismus 4 übertragen wird. Die Auslegung des Einstellbeschlags 1, insbesondere der Verriegelungseinheit 3, darüber hinaus mit einer Öffnungsbewegung in beide Drehrichtungen (= eUR, UR), ohne dass ein separates Bauteil als Aktuator zum Zurückziehen der Riegel 3.2 (auch Zahnsegmente genannt) in immer eine Drehrichtung benötigt wird, ermöglicht, dass die Verstellung in eine gewünschte Drehrichtung der Rückenlehne R motorisch angetrieben werden kann.

Die Spielfreistellungselemente 3.3 sind hebelförmig ausgebildet. Die Spielfreistellungselemente 3.3 weisen darüber hinaus jeweils eine Spannkontur 3.3.1 zur Spielfreistellung auf. Die Spannkontur 3.3.1 kann als eine Außen- oder Innenkontur ausgebildet sein. Die Spannkontur 3.3.1 weist eine Keilform auf. Die Riegel 3.2 weisen jeweils einen korrespondierenden Nocken 3.2.2 auf, der derart in Wirkeingriff mit der zugehörigen Spannkontur 3.3.1 gelangt, dass eine Spielfreistellung ermöglicht ist.

Bei einer gewünschten Verstellung der Rückenlehne R werden dabei durch die Drehbewegung des Antriebs in eine der beiden Richtungen zuerst insbesondere zwei der Spielfreistellungselemente 3.3 mit der Spannkontur 3.3.1 zusammengezogen und mittels der Lagefeder 5 vorgespannt, wobei die Riegel 3.2 entriegelt werden, wobei mit gleicher weiterer Drehbewegung in gleiche Drehrichtung anschließend die Zahnräder 2.3, insbesondere die Planeten, angetrieben und die Rückenlehne R bewegt, insbesondere verstellt wird.

Durch spezielle geometrische Gestaltung der Zähne der Riegel 3.2 und der (gespiegelten) Lage der Riegel 3.2 zueinander werden bei dem Einstellbeschlag 1 die Verzahnungen 3.2.1 der Riegel 3.2 zur kompletten Spielfreistellung des Einstellbeschlags 1 verwendet. Fertigungstoleranzen werden dabei durch Spannkonturen 3.3.1 an den im Planetenträger gelagerten, federvorgespannten Spielfreistellungselementen 3.3, zum Beispiel den Hebeln, durch unterschiedlich tiefen Einfall der Verzahnungen 3.2.1 in Kombination mit ihrer Bewegung in Umfangsrichtung entsprechend der Lage der Zahnkränze der Innenverzahnungen 1.1.1 und 1.2.1 der Beschlagteile 1.1, 1.2 ausgeglichen, ohne dass der lehnenfeste Zahnkranz der Innenverzahnung 1.2.1 des lehnenfesten Beschlagteils 1.2 sich relativ zum sitzfesten Zahnkranz der Innenverzahnung 1.1.1 des sitzfesten Beschlagteils 1.1 bewegen muss, d. h. die Verstellung ist stufenlos.

Des Weiteren kann zur Positionierung der Riegel 3.2 zueinander und zur Führung der Riegel 3.2 aus der Verriegelungsposition VP in eine mittige Ausgangs- oder Offenstellung OS (auch Reset genannt, in **Figur 11** dargestellt) die Riegelführung 2.2 federvorgespannt sein. Durch eine solche, während des Einfallens der Riegel 3.2 in die Verriegelungsposition VP ermöglichte Riegelbewegung in Umfangsrichtung verbunden mit einer tangentialen Kraftkomponente der Spielfreistellungselemente 3.3 und des Steuermechanismus 4 ist eine mögliche Kopf-auf-Kopfstellung in der Verriegelungsposition VP von Innenverzahnungen 1.1.1, 1.2.1 und Verzahnungen 3.2.1 der Riegel 3.2 weitgehend vermieden.

Zur Halterung der Zahnräder 2.3 und beweglichen Führung der Lagefeder 5 beim Vorspannen der Spielfreistellungselemente 3.3 ist die Trägerscheibe 6 vorgesehen. Die beiden Beschlagteile 1.1, 1.2 sind darüber hinaus mittels einer Halterung 7 miteinander gehalten. Dabei ist das zweite Beschlagteil 1.2 beweglich in der Halterung 7 gelagert. Das erste Beschlagteil 1.1 ist mit der Halterung 7 fixiert, insbesondere sind diese miteinander form-, kraft- und/oder stoffschlüssig befestigt, beispielsweise geschweißt.

Darüber hinaus sind zum Schutz des Einstellbeschlags 1 zwei äußere Abdeckungen 8.1 und 8.2 vorgesehen. Die Abdeckungen 8.1, 8.2 sind beispielsweise scheibenförmig mit einem abgewinkelten Rand ausgeführt. Darüber hinaus sind die Abdeckungen 8.1 und 8.2 fest mit der Halterung 7 und/oder den Beschlagteilen 1.1, 1.2 verbunden. Die Abdeckungen 8.1 und 8.2 dienen insbesondere der Lackierdichteinheit sowie der Geräuschminderung. Zwischen der jeweiligen Abdeckung 8.1, 8.2 und dem jeweiligen Beschlagteil 1.1, 1.2 und/oder der Halterung 7 können mindestens ein Unterlegelement 9, insbesondere wellenförmige Unterlegscheiben oder Federelemente, und ein Lagerelement 10 vorgesehen sein. Das Lagerelement 10 ist darüber hinaus als eine Bremseinrichtung 17 beispielsweise in Form einer gewellten Scheibe ausgebildet ist

Zur Halterung, insbesondere zentrierten Halterung, der Riegelführung 2.2 kann darüber hinaus das Lagerelement 10 eine weitere Lagefeder 5 in Form von integrierten Federarmen 5.1 umfassen, mittels welcher die Riegelführung 2.2 federvorgespannt und zentriert am Träger 2.1 gehalten ist.

**Figuren 1A** **und** **2A** zeigen das Lagerelement 10, die Abdeckung 8.1 und das erste (sitzfeste) Beschlagteil 1.1 im Detail. Das Lagerelement 10 weist insbesondere zur Erzielung einer Bremsfunktion eine gewellte Form auf. Hierzu umfasst das Lagerelement 10 beispielsweise axial von einem Ring 10.1 radial nach innen gerichtete Bremsarme 10.2 auf. Der Ring 10.1 liegt auf einer Abstützung 1.1.2 des ersten Beschlagteils 1.1 auf. Die Abstützung 1.1.2 umfasst beispielsweise eine Anzahl von Abstützzungen oder -nasen, die insbesondere symmetrisch verteilt, radial nach innen von einem Hohlringabsatz des ersten Beschlagteils 1.1 abragen. Diese Bremsarme 10.2 sind unter Vorspannung fest mit dem Träger 2.1 verbunden, insbesondere vernietet. Hierdurch wird der Träger 2.1 unter Vorspannung am ersten Beschlagteil 1.1 (sitzfesten Beschlagteil) gehalten. Eine solche Bremsfunktion wird zum sicheren Erreichen eines Überhubs beim Zurückziehen der Riegel 3.2 benötigt, damit eine Lehnenverstellung nicht startet, bevor die Riegel 3.2 weit genug von den Gegenverungen - den Innenverzahnungen 1.1.1, 1.2.1 der Beschlagteile 1.1, 1.2 - entfernt sind. Im Ausführungsbeispiel sind sechs Bremsarme 10.2 verteilt und beispielsweise jeweils um 60° versetzt zueinander am Ring 10.1 angeordnet.

Darüber hinaus umfasst das Lagerelement 10 als Lagefeder 5 die integrierten Federarme 5.1 zur zentrierten Halterung der Riegelführung 2.2 im Detail. Drei der sechs Bremsarme 10.2 umfassen im Ausführungsbeispiel jeweils zwei abstehende integrierte Federarme 5.1.

Anstelle einer einteiligen Ausführungsform von Lagerelement 10 und Lagefeder 5 können diese, wie dargestellt auch separat ausgebildet sein.

Dabei kann das separate Lagerelement 10' als eine wellenförmige Unterlegscheibe und die separate Lagefeder 5' als eine Drahtfeder ausgebildet sein.

Die Abdeckung 8.1 ist insbesondere form- und kraftschlüssig mit dem ersten Beschlagteil 1.1 verbunden, beispielsweise miteinander verklemmt, verrastet, gebördelt oder verkrimpt. Beispielsweise umfasst die Abdeckung 8.1 um den Umfang verteilt am Rand eine Anzahl von mittels Schlitzen eingebrachten Befestigungselementen 8.1.1, welche im zusammengesetzten Zustand des Einstellbeschlags 1 form- und kraftschlüssig in Aufnahmen 1.1.4 des ersten Beschlagteils 1 mit dem Einstellbeschlag 1 verbunden sind, beispielsweise gebördelt oder verkrimpt sind.

Zusätzlich umfasst das erste Beschlagteil 1.1 eine Außenverzahnung 1.1.3 (siehe **Figur 2A**)**.**

**Figuren 1B** **und** **2B** zeigen die Getriebeeinheit 2 mit ihren Komponenten - den Träger 2.1, der Riegelführung 2.2, den Zahnrädern 2.3, deren Lagerbolzen 2.4 und dem Steuermechanismus 4 im Detail. Die Trägereinheit 2.1 umfasst Aufnahmen 2.5 für die Lagerbolzen 2.4.

Zur Halterung der Riegelführung 2.2 am Träger 2.1 weist dieser eine entsprechende Innenkontur 2.1.1 auf, in welche die Riegelführung 2.2 angeordnet ist. Die Innenkontur 2.1.1 weist dabei geringfügig größere Abmessungen als die der Außenkontur der Riegelführung 2.2 zum Ausgleich von Toleranzen auf. Zum sicheren Halten der Riegelführung 2.2 am Träger 2.1 ist diese mittels Befestigungselementen 2.1.2, zum Beispiel Federklemmen, am Träger 2.1 gehalten. Die Befestigungselemente 2.1.2 durchgreifen dabei von der von der Riegelführung 2.2 abgewandten Trägerseite Durchgangsöffnungen 2.1.3 im Träger 2.1 und halten mit ihren freien Enden die Riegelführung 2.2 in der Innenkontur 2.1.1 am Träger 2.1.

Die Radialführungen 2.2.1 der Riegelführung 2.2 sind als Langlöcher ausgebildet. Die Riegelführung 2.2 ist beispielsweise scheibenförmig als ein Innenring mit radial abstehenden Armen ausgebildet, in welche Schlitz oder Langlöcher als Radialführungen 2.2.1 für die Nocken 3.2.2 eingebracht sind.

Die Lagerbolzen 2.4 sind jeweils zylinderförmig mit zwei axialen Lagerenden 2.4.1, 2.4.2 und einem Lagerkörper 2.4.3 für die Zahnräder 2.3 ausgebildet. Das jeweilige erste axiale Lagerende 2.4.1 ist in der Aufnahme 2.5 des Trägers 2.1 gelagert. Das jeweilige zweite axiale Lagerende 2.4.2 ist in der Trägerscheibe 6 gelagert. Darüber hinaus sind zumindest zwei der zweite axialen Lagerende 2.4.2 in den Öffnungen 16 der Spielfreistellungselemente 3.3 aufgenommen und dienen als Lagerungen der Spielfreistellungselemente 3.3. Alternativ kann ein separater Bolzen 5.2 vorgesehen sein.

Zur Befestigung der Bremsarme 10.2 des Lagerelements 10 unter Vorspannung am Träger 2.1 umfasst dieser beispielsweise korrespondierende Befestigungsmittel 2.1.4, zum Beispiel abstehende Nietbolzen, welche mit Öffnungen in den Bremsarmen 10.2 vernietet werden (dargestellt in **Figur 2B**)**.**

Darüber hinaus weist der scheibenförmige Träger 2.1 eine Innenringkontur 2.1.5 auf, welche mit einer Außenkontur 4.1 des Steuermechanismus 4 korrespondiert (dargestellt in **Figur 2B**)**.**

Der Steuermechanismus 4 umfasst darüber hinaus eine Innenkontur 4.2, welche mit einer Kontur des Übertragungsrohrs 14 des Motors 15 korrespondiert.

Die Zahnräder 2.3 weisen jeweils eine Außenverzahnung 2.3.1 auf, welche mit den Innenverzahnungen 1.1.1 und 1.2.1 der Beschlagteile 1.1, 1.2 korrespondieren.

**Figuren 1C** **und** **2C** zeigen die Verriegelungseinheit 3 und ihre Komponenten - die Riegel 3.2, die Entriegelungseinheit 3.1, die Spielfreistellungselemente 3.3 und die Trägerscheibe 6 - im Detail.

Die Riegel 3.2 tragen radial außen jeweils eine Verzahnung 3.2.1. Die Verzahnung 3.2.1 ist in Axialrichtung mehrfach, insbesondere zweifach ausgebildet. Beispielsweise umfasst jeder Riegel 3.2 zwei Radialzahnkränze 3.2.1a und 3.2.1b, die axial nebeneinander in einer Ebene angeordnet sind. Dabei ist die Zahnkranzreihe des jeweiligen Radialzahnkranzes 3.2.1a, 3.2.1b in der Verriegelungsposition VP in eine der Innenverzahnungen 1.1.1 und 1.2.1 der Beschlagteile 1.1, 1.2 mit mindestens einem der Zähne in Zahneingriff bringbar.

Die Riegel 3.2 weisen jeweils den Nocken 3.2.2 auf, der in Wirkeingriff mit der zugehörigen Spannkontur 3.3.1 der Spielfreistellungselemente 3.3 gelangt, um eine Spielfreistellung zu ermöglichen.

Darüber hinaus weisen die Riegel 3.2 auf der von den Nocken 3.2.2 abgewandten Oberflächenseite in Richtung der Getriebeeinheit 2 die Führungsstifte 3.2.3 auf.

In Richtung des Steuermechanismus 4 weisen die Riegel 3.2 abragende Stege 3.2.4 auf, welche in der Verriegelungsposition VP des Einstellbeschlags 1 mit der Außenkontur 4.1 des Steuermechanismus 4 in eine Kopf-auf-Kopfposition gelangen, um die Riegel 3.2 in ihren verriegelnden Eingriff zu halten und insbesondere bei auftretenden hohen mechanischen Beanspruchungen zu sperren (= sogenannte crash locking function).

Die Spielfreistellungselemente 3.3 sind hebelförmig ausgebildet. Die Spielfreistellungselemente 3.3 weisen, wie oben bereits beschrieben, jeweils die Spannkontur 3.3.1 auf.

Zur Auslegung des Einstellbeschlags 1 und dessen Verriegelungseinheit 3 mit einer Öffnungsbewegung in beide Drehrichtungen (= eUR, UR) durch Zurückziehen der Riegel 3.2 weist das jeweilige Spielfreistellungselement 3.3 darüber hinaus eine entsprechende Öffnungskontur 3.3.2, insbesondere eine Innenkontur, auf. Die Öffnungskonturen 3.3.2 der beiden Spielfreistellungselemente 3.3 sind gegensinnig ausgestaltet. Die Spielfreistellungselemente 3.3 werden gegensinnig betätigt. Der Steuermechanismus 4 umfasst mindestens einen Führungsstift 4.3 (dargestellt in **Figuren 1B** **und** **4**, 5, 8), der entlang der Öffnungskontur 3.3.2 bewegt wird.

Die Riegel 3.2 sind an der Trägerscheibe 6 vorgespannt gehalten. Hierzu sind zwei der Riegel 3.2 mittels der zwei integrierten Federarme 13.1 in entgegensetzte Richtung zueinander spannbar gehalten. Darüber hinaus umfassen die Trägerscheibe 6 und die Spielfreistellungselemente 3.3 korrespondierende Öffnungen 16, in welche die Lagerenden 2.4.2 oder optional zugehörige Bolzen 5.2 zur Lagerung der Spielfreistellungselemente 3.3 an der Trägerscheibe 6 aufgenommen sind (wie in **Figuren 1B****,** **2B****,** **1C** **und** **2C** dargestellt).

Zum Zurückziehen der Riegel 3.2 mittels der Nocken 3.2.2 umfasst die Entriegelungseinheit 3.1 eine Gleitführung in Form von Slots 3.1.1, insbesondere bogenförmigen Ringslots.

**Figuren 1D** **und** **2D** zeigen die lehnenseitigen Komponenten des Einstellbeschlags 1, insbesondere das zweite (lehnenseitige) Beschlagteil 1.2, das Unterlegelement 9, die Halterung 7 und die Abdeckung 8.2 im Detail. Die Abdeckung 8.2 ist an der Halterung 7 form- und kraftschlüssig befestigt, insbesondere gebördelt, verkrimpt oder verrastet. Die Halterung 7 ist hohlzylindrisch, insbesondere als eine Ringscheibe ausgebildet, die zumindest einen nach innen gerichteten Rand aufweist. In dem Rand ist eine Anzahl von symmetrisch verteilt angeordneten Ausnehmungen 7.1 vorgesehen. Die Abdeckung 8.2 weist darüber hinaus beispielsweise eine Anzahl von Befestigungselemente 8.2.1 auf, die jeweils mit dem nach gerichteten Rand der Halterung 7 verbunden werden, beispielsweise gebördelt oder verkrimpt werden.

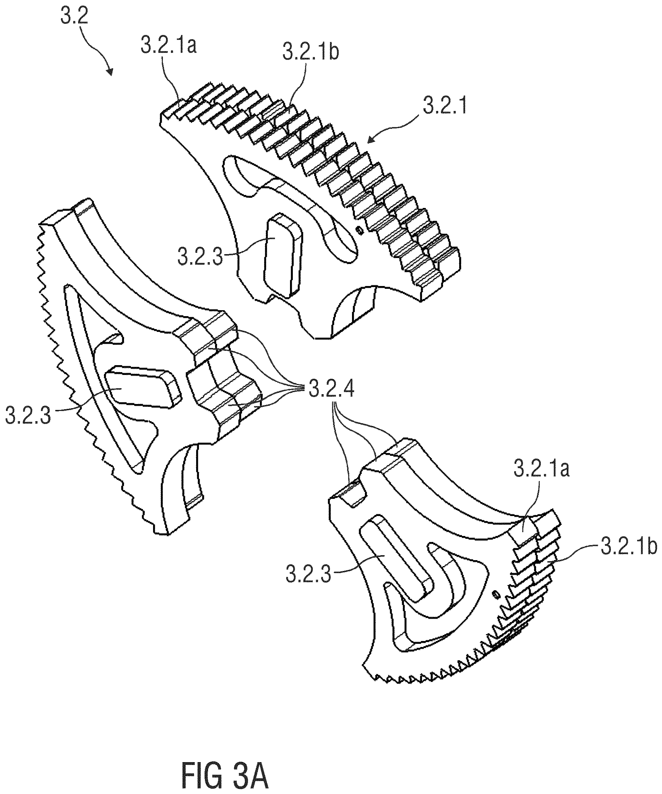

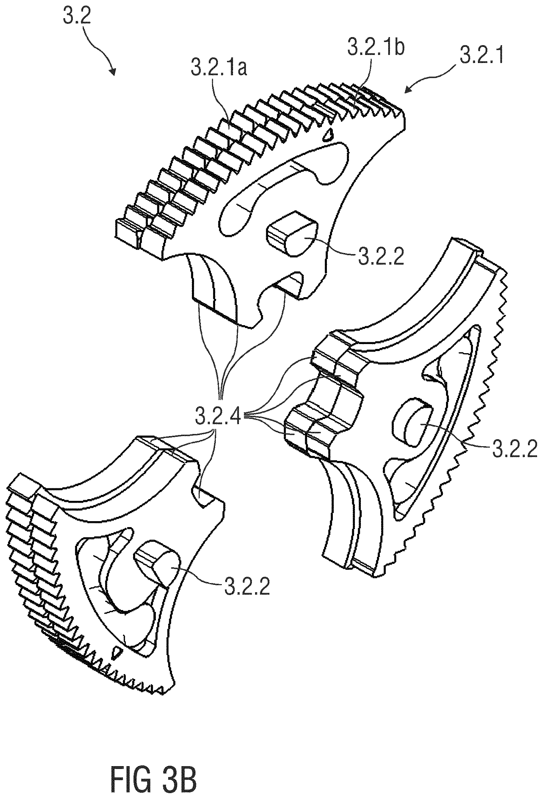

**Figuren 3A** **und** **3B** zeigen schematisch verschiedene Ansichten der drei Riegel 3.2 der Verriegelungseinheit 3 mit den Radialzahnkränzen 3.2.1a, 3.2.1b. Die Radialzahnkränze 3.2.1a und 3.2.1b können dabei eine gleiche Anzahl von Zähnen oder eine unterschiedliche Anzahl von Zähnen aufweisen. Im Ausführungsbeispiel ist die Anzahl der Zähne verschieden. Die Formen der Radialzahnkränze 3.2.1a und 3.2.1b kann ebenfalls verschieden sein. Ebenso kann die Form der Riegel 3.2 unterschiedlich sein. Die Riegel 3.2 mit den zwei Radialzahnkränzen 3.2.1a und 3.2.1b können jeweils einteilig ausgebildet sein, zum Beispiel aus einem Sintermaterial oder als ein Spritzgussbauteil. Alternativ können diese separat ausgebildet sein und miteinander fest verbunden, insbesondere geschweißt sein.

Darüber hinaus können alle Zahnköpfe der Radialzahnkränze 3.2.1a und 3.2.1b des jeweiligen Riegels 3.2 derart eingerichtet sein, dass diese dieselben Kopfabstände aufweisen, wie die Hohlradverzahnung, insbesondere die Innenverzahnungen 1.1.1, 1.2.1 der Beschlagteile 1.1, 1.2. Alternativ können die Köpfe der Zähne des jeweiligen Radialzahnkranzes 3.2.1a und 3.2.1b unterschiedlich voneinander beabstandet sein. Beispielsweise können die Kopfabstände zwischen den Zähnen des jeweiligen Radialzahnkranzes 3.2.1a und 3.2.1b von einer Mittellinie des betreffenden Riegels 3.2 gesehen nach außen abnehmen.

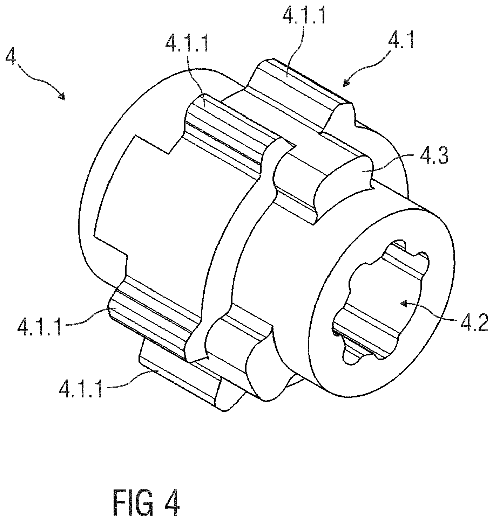

**Figur 4** zeigt schematisch den Steuermechanismus 4 im Detail mit seiner Außenkontur 4.1, der Innenkontur 4.2 und dem Führungsstift 4.3. Die Außenkontur 4.1 umfasst Vorsprünge 4.1.1, welche in der Verriegelungsposition VP die Riegel 3.2 in ihrer verriegelten Stellung halten, insbesondere blockieren.

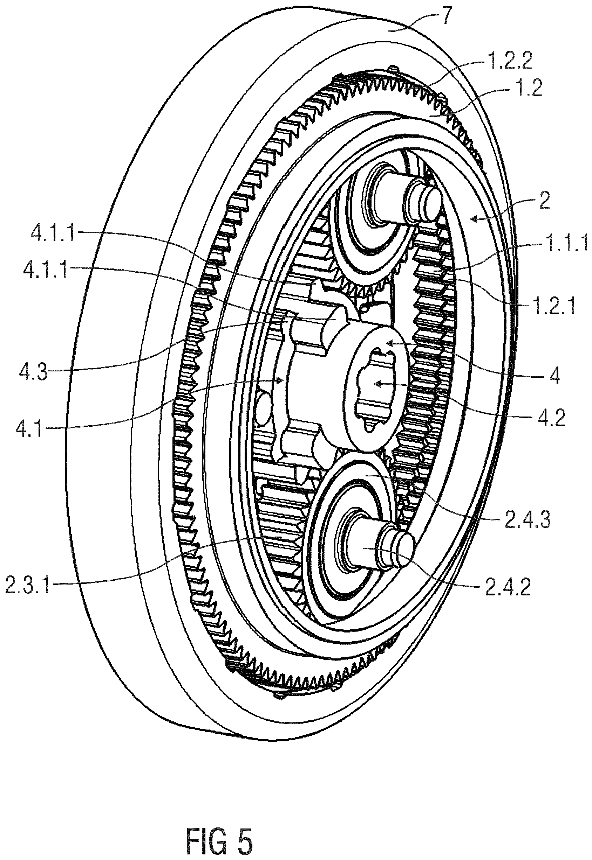

**Figur 5** zeigt schematisch die Getriebeeinheit 2 im zusammengebauten Zustand in den beiden Beschlagteilen 1.1, 1.2 des Einstellbeschlags 1 und ohne die Verriegelungseinheit 3. Die Zahnräder 2.3 kämmen dabei in den beiden Innenverzahnungen 1.1.1 und 1.2.1.

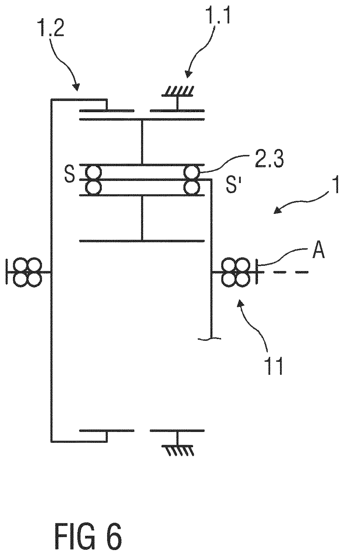

**Figur 6** zeigt schematisch eine Ausführungsform für eine Getriebeschaltung eines Einstellbeschlags 1 mit einem zentrischen Antrieb 11 für den Motor 15.

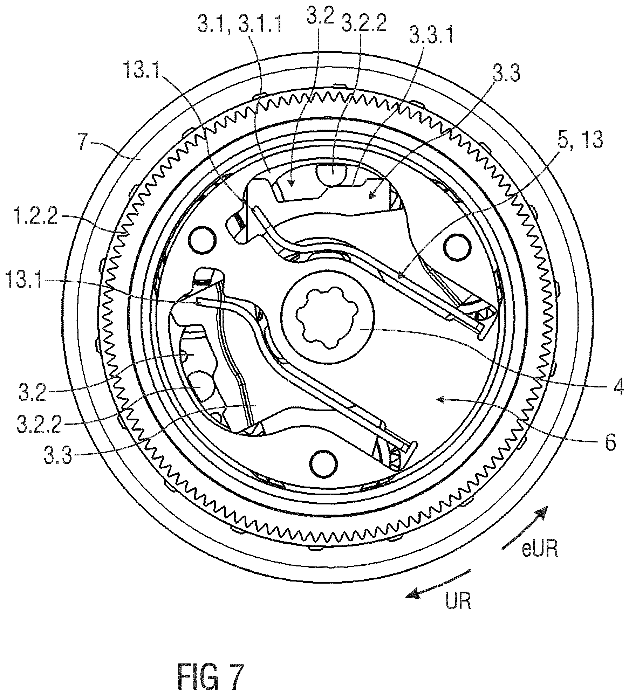

**Figur 7** zeigt schematisch die Lehnenseite des Einstellbeschlags 1 ohne Abdeckung 8.2 und mit Trägerscheibe 6 sowie mit dem zweiten Beschlagteil 1.2 mit Außenverzahnung 1.2.2. Die Trägerscheibe 6 umfasst eine weitere Lagefeder 5 mit integrierten Federarmen 13.1 für die Spielfreistellungselemente 3.3 mit deren Spannkontur 3.3.1 für die Nocken 3.2.2 der Riegel 3.2. Zum Zurückziehen der Riegel 3.2 mittels der Nocken 3.2.2 umfasst die Entriegelungseinheit 3.1 eine Gleitführung in Form der Slots 3.1.1, insbesondere bogenförmigen Ringslots.

Die Federarme 13.1 sind in dieser **Figur 7** noch nicht hinter die Spielfreistellungselemente 3.3, insbesondere Hebel, eingehangen und daher noch nicht gespannt.

Der Antrieb des Einstellbeschlags 1 erfolgt direkt. Beispielsweise erfolgt ein solcher direkter Antrieb über ein nicht näher dargestelltes Übertragungsrohr, mit dem ein Antriebsmoment von einem Motor auf den Steuermechanismus 4 übertragen wird. Zur Auslegung des Einstellbeschlags 1 und dessen Verriegelungseinheit 3 mit einer Öffnungsbewegung in beide Drehrichtungen (= eUR, UR) durch Zurückziehen der Riegel 3.2 weist das jeweilige Spielfreistellungselement 3.3 eine entsprechende Öffnungskontur 3.3.2, insbesondere eine Innenkontur, auf. Die Öffnungskonturen 3.3.2 der beiden Spielfreistellungselemente 3.3 sind gegensinnig ausgestaltet. Die Spielfreistellungselemente 3.3 werden gegensinnig betätigt. Der Steuermechanismus 4 umfasst mindestens einen, insbesondere mehrere Führungsstifte 4.3, der/die entlang der Öffnungskontur 3.3.2 bewegt wird/werden.

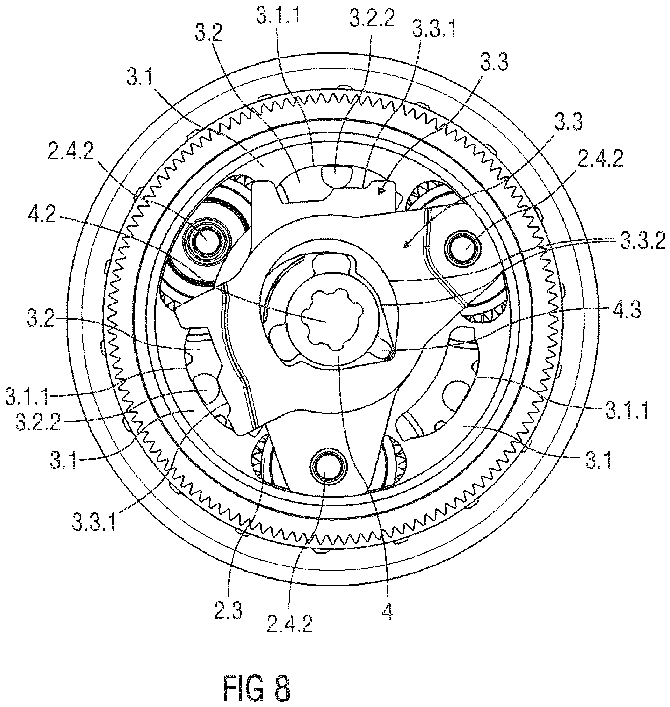

**Figur** 8 zeigt schematisch eine weitere Ansicht der Lehnenseite des Einstellbeschlags 1 gemäß **Figur** 7 ohne Abdeckung 8.2, ohne Trägerscheibe 6 mit Federarmen 13.1 für die Spielfreistellungselemente 3.3 und mit Entriegelungseinheit 3.1. Nur zwei der Riegel 3.2 sind vorgespannt mittels der Spielfreistellungselemente 3.3 und insbesondere deren Spannkontur 3.3.1 geführt und in der Verriegelungsposition VP vorgespannt verriegelt.

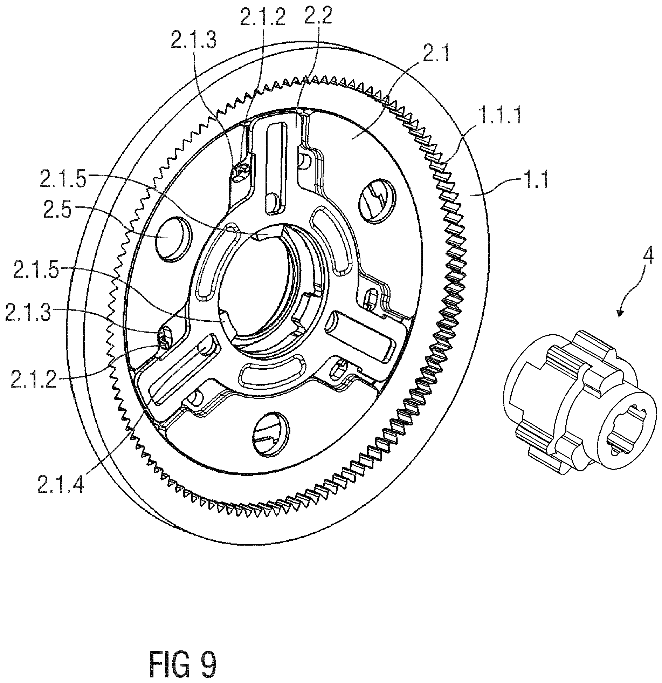

**Figur 9** zeigt schematisch in Innenansicht auf eine sitzfeste Seite den Einstellbeschlag 1 mit dem ersten Beschlagteil 1.1 und dessen Innenverzahnung 1.1.1, der Riegelführung 2.2, dem Träger 2.1 für die Riegelführung 2.2 und der Befestigungselemente 2.1.2 für die toleranzausgleichende Lagerung der Riegelführung 2.2 in dem Träger 2.1 und ohne den zentrischen Steuermechanismus 4. Der Träger 2.1 umfasst eine nach innen gerichtete Innenringkontur 2.1.5 mit Trägernasen, welche mit einem Leerweg in der Außenkontur 4.1 des Steuermechanismus 4 im zusammengebauten Zustand des Einstellbeschlags 1 angeordnet sind.

**Figur 10** zeigt schematisch in Draufsicht eine Ausführungsform für die kombinierte Getriebeeinheit 2 und die Verriegelungseinheit 3 des Einstellbeschlags 1 in der Verriegelungsposition VP, in welcher sowohl die Riegel 3.2 als auch die Zahnräder 2.3 in Zahneingriff mit den Innenverzahnungen 1.1.1, 1.2.1 der Beschlagteile 1.1, 1.2 sind. Die Riegel 3.2, auch Zahnsegmente genannt, können unterschiedliche Formen, insbesondere Konturen, für Laserschweißverbindungen aufweisen, um beispielsweise bei einer mehrteiligen Ausbildung der Riegel 3.2 die beiden scheibenförmigen Segmente zusammenzuschweißen. Die Verbindung der Segmente erfolgt dabei besonders nahe zu der Verzahnung 3.2.1 und möglichst lang sowie ohne hohe Belastung am Nahtanfang. Aus diesem Grund ist im Ausführungsbeispiel eine runde Schweißkontur dargestellt. Wie bereits oben beschrieben, kann der jeweilige Riegel 3.2 auch einteilig ausgebildet sein. Auch können die Segmente der Riegel 3.2 alle gleichförmig geschweißt werden.

**Figur 11** zeigt die Detailansicht des Eingriffs eines der Riegel 3.2 in die Gegenverzahnungen der Beschlagteile 1.1, 1.2 in der Verriegelungsposition VP des Einstellbeschlags 1. In jeder Verzahnungsebene, das heißt in einer ersten Verzahnungsebene mit der ersten Innenverzahnung 1.1.1 des ersten Beschlagteils 1.1 und in einer zweiten Verzahnungsebene mit der zweiten Innenverzahnung 1.2.1 des zweiten Beschlagteils 1.2, ist zur Spielfreistellfunktion jeweils nur ein Zahn im Kontakt mit der zugehörigen Innenverzahnung 1.1.1 bzw. 1.2.1.

So umfasst der Radialzahnkranz 3.2.1a, der in der ersten Innenverzahnung 1.1.1 eingreift, einen ersten Zahn Z1, der in direktem Kontakt im Kontaktbereich K1 mit der ersten Innenverzahnung 1.1.1 in der Verriegelungsposition VP gelangt. Die anderen Zähne des Radialzahnkranzes 3.2.1a greifen in die erste Innenverzahnung 1.1.1 kontaktlos und somit mit einem Spiel ein.

Der in die zweite Innenverzahnung 1.2.1 eingreifende Radialzahnkranz 3.2.1b umfasst einen zweiten Zahn Z2, der in direktem Kontakt im Kontaktbereich K2 mit der zweiten Innenverzahnung 1.2.1 in der Verriegelungsposition VP gelangt. Die anderen Zähne des Radialzahnkranzes 3.2.1b greifen in die zweite Innenverzahnung 1.2.1 kontaktlos und somit mit einem Spiel ein.

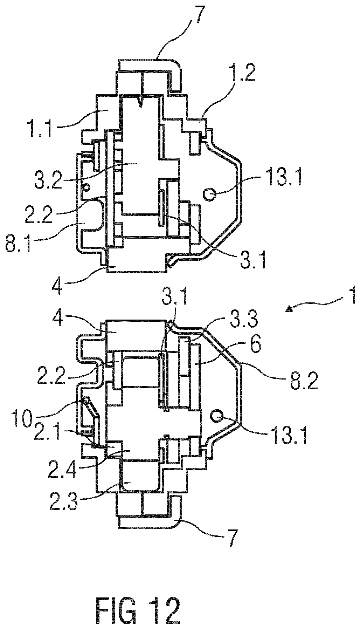

**Figur 12** zeigt schematisch eine Schnittdarstellung des Einstellbeschlags 1.

**Figur 13** zeigt schematisch in perspektivischer Darstellung den montierten Einstellbeschlag 1 an Flanschen 12 von der Innenseite des Fahrzeugsitzes S. Der obere Flansch 12.1 ist an der Rückenlehne R befestigt. Der untere Flansch 12.2 ist fahrzeugseitig am Sitzunterbau SU befestigt.

Ein solcher Fahrzeugsitz S mit einem solchen Einstellbeschlag 1, wie zuvor beschrieben, kann hohe Lasten von der Rückenlehne R über den Einstellbeschlag 1 und die Flansche 12 in den Sitzunterbau SU ableiten. Der Fahrzeugsitz S kann ein integriertes Gurtsystem aufweisen.

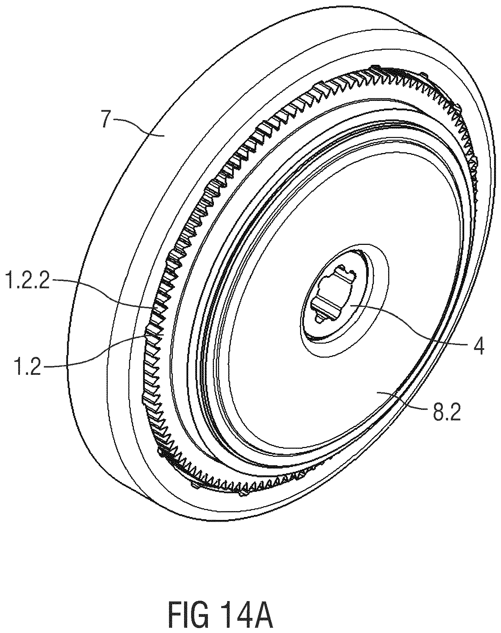

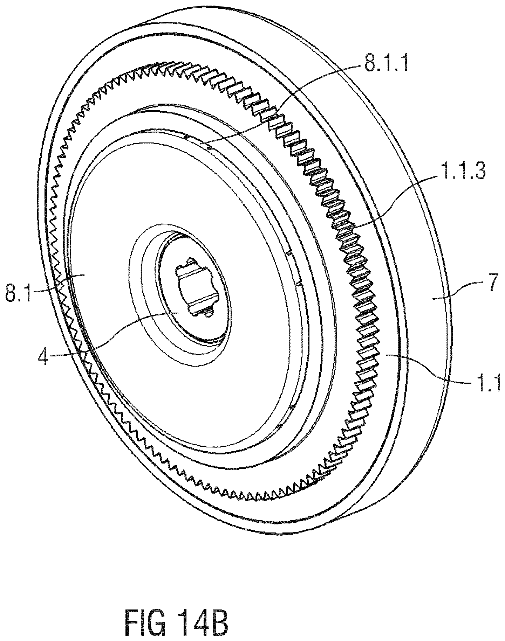

**Figuren 14A** **und** **14b** zeigen schematisch den abgedeckten Einstellbeschlag 1 im zusammengebauten Zustand.

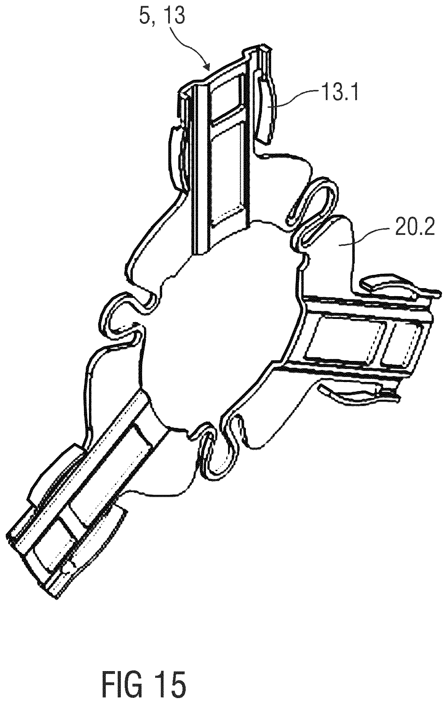

**Figur 15** zeigt schematisch in Explosionsdarstellung eine alternative Ausführungsform für eine Riegelführung 20.2 eines Einstellbeschlags 1.

Des Weiteren kann zur Positionierung der Riegel 3.2 zueinander und zur Führung der Riegel 3.2 aus der Verriegelungsposition VP in die mittige Ausgangs- oder Offenstellung OS (auch Reset genannt, in **Figur 11** dargestellt) eine federvorgespannte Riegelführung 20.2 (auch segment guide genannt) vorgesehen sein. Die Riegelführung 20.2 ermöglicht eine Bewegung der Riegel 3.2 in Umfangsrichtung. Durch eine solche, während des Einfallens der Verzahnungen 3.2.1 der Riegel 3.2 in die Verriegelungsposition VP ermöglichte Riegelbewegung in Umfangsrichtung verbunden mit einer tangentialen Kraftkomponente der Spielfreistellungselemente 3.3 und des Steuermechanismus 4 ist eine mögliche Kopf-auf-Kopfstellung der Zähne weitgehend vermieden.

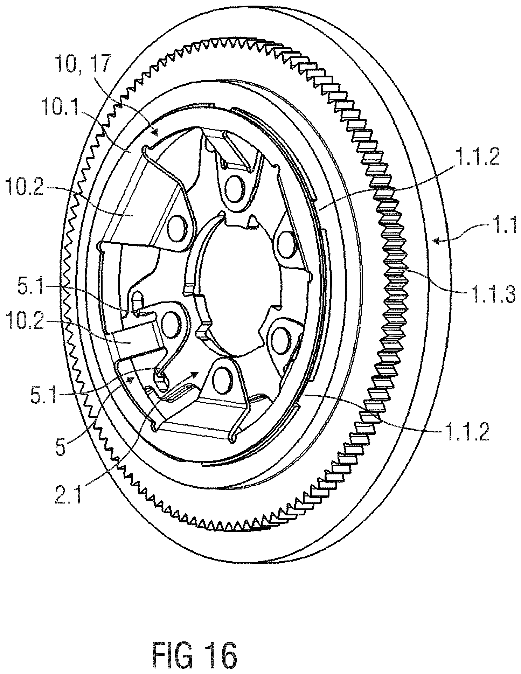

**Figur 16** zeigt schematisch im zusammengebauten Zustand den Einstellbeschlag 1 ohne Abdeckung 8.1 mit dem Lagerelement 10, das als Bremseinrichtung 17 in Form einer gewellten Scheibe ausgebildet ist. Hierzu umfasst das Lagerelement 10 beispielsweise mehrere axial von dem Ring 10.1 radial nach innen gerichtete Bremsarme 10.2. Diese Bremsarme 10.2 sind unter Vorspannung fest mit dem Träger 2.1 verbunden, insbesondere vernietet. Hierdurch wird der Träger 2.1 unter Vorspannung an dem ersten Beschlagteil 1.1 (sitzfesten Beschlagteil) gehalten. Die Bremseinrichtung 17 der Getriebeeinheit 2 ermöglicht in einfacher Art und Weise eine Überhubsicherung der Riegel 3.2 für eine sichere Entriegelung dieser vor einer Verstellbewegung der Rückenlehne R.

Zur zentrierten Halterung der Riegelführung 2.2 umfasst das Lagerelement 10 darüber hinaus die integrierten Federarme 5.1, mittels welcher die Riegelführung 2.2 im zusammengebauten Zustand des Einstellbeschlags 1 federvorgespannt und zentriert am Träger 2.1 gehalten ist.

Die Trägerscheibe 6 und die Lagefeder 5 sind in dieser Ausführungsform als ein Spannelement 13 (**Figur 7**) zum Spannen der Spielfreistellungselemente 3.3 ausgebildet. Das Spannelement 13 umfasst Federarme 13.1, welche die Spielfreistellungselement 3.3 in analoger Art und Weise zusammendrücken.

Die Trägerscheibe 6 oder das Spannelement 13 dienen zudem als Käfig für die radiale und axiale Lagerung und/oder Fixierung aller Innenkomponenten des Einstellbeschlags 1, insbesondere der Zahnräder 2.3 und der Riegel 3.2.

Die Halterung 7 ist L-förmig ausgestaltet und dient einer axialen Halterung der Außenkomponenten des Einstellbeschlags 1, insbesondere der Beschlagteile 1.1, 1.2.

Die Getriebeeinheit 2 und die Verriegelungseinheit 3 sind innenseitig zusätzlich zu den Beschlagteilen 1.1, 1.2 mittels des Trägers 2.1 und der Trägerscheibe 6 gehalten und miteinander gekoppelt. Eine solche Anordnung bildet einen Doppelträger und sichert einen stabilen und festen Aufbau. Insbesondere können der Träger 2.1 und die Trägerscheibe 6 beispielsweise mittels Einpressgewindebolzen oder Verschraubungen oder anderen geeigneten Mitteln miteinander gehalten und verbunden sein. Die Bolzen können dabei auch als Lager für die Zahnräder 2.3 und die Spielfreistellungselemente 3.3 dienen.

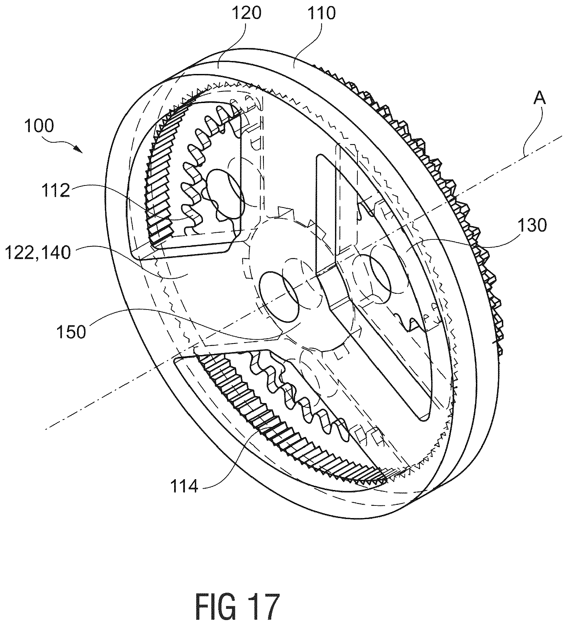

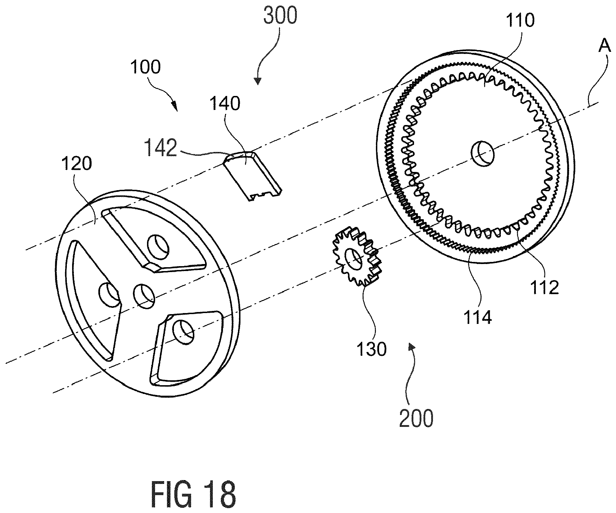

Die **Figuren 17** **und** **18** zeigen einen Einstellbeschlag 100 gemäß eines weiteren allgemeinen Ausführungsbeispiels für die separate Ausgestaltung von Getriebeeinheit 200 und Verriegelungseinheit 300. Der Einstellbeschlag 100 kombiniert einen als ein Planetengetriebe ausgebildeten Getriebebeschlag und eine Rastverriegelung.

Der Einstellbeschlag 100 weist ein erstes Beschlagteil 110, ein zweites Beschlagteil 120, drei Zahnräder 130 und drei Riegel 140 auf. Das erste Beschlagteil 110 und das zweite Beschlagteil 120 sind weitgehend scheibenförmig, wobei das erste Beschlagteil 110 geringfügig topfförmig ausgebildet ist. Das erste Beschlagteil 110 und das zweite Beschlagteil 120 sind radial außen um eine zentrale Drehachse A zueinander drehbar mittels eines in den Figuren nicht dargestellten Umklammerungsrings gelagert. Ein solcher Umklammerungsring ist beispielsweise aus der DE 10 2009 041 492 A1 bekannt. Die Zahnräder 130 und die Riegel 140 sind in einem von den Beschlagteilen 110, 120 gebildeten Aufnahmeraum angeordnet.

Das erste Beschlagteil 110 ist beispielsweise fest mit einem Sitzunterbau SU eines Fahrzeugsitzes S und das zweite Beschlagteil 120 fest mit einer Rückenlehne R des Fahrzeugsitzes S verbindbar. Das erste Beschlagteil 110 ist alternativ mit einer Rückenlehne R eines Fahrzeugsitzes S und das zweite Beschlagteil 120 mit dem Sitzunterbau SU des Fahrzeugsitzes S verbindbar.

Sofern nicht abweichend beschrieben beziehen sich die Begriffe radial, axial und in Umfangsrichtung auf die zentrale Drehachse A des Einstellbeschlags 100. Radial bedeutet senkrecht zur zentralen Drehachse A. Axial bedeutet in Richtung oder parallel zur zentralen Drehachse A.

Das erste Beschlagteil 110 weist eine erste Innenverzahnung 112 und eine zweite Innenverzahnung 114 auf. Die erste Innenverzahnung 112 ist axial versetzt zur zweiten Innenverzahnung 114 angeordnet. Die zweite Innenverzahnung 114 ist im Vergleich zur ersten Innenverzahnung 112 vorzugsweise feiner ausgeführt. Die erste Innenverzahnung 112 bildet ein Hohlrad des Planetengetriebes des Getriebebeschlags. Die zweite Innenverzahnung 114 ist ein Bestandteil der Rastverriegelung.

Das zweite Beschlagteil 120 wirkt sowohl als ein Steg des Planetengetriebes als auch als ein Führungsbauteil der Rastverriegelung. Die drei Zahnräder 130 wirken als Planetenräder des Planetengetriebes und sind jeweils auf einem von insgesamt drei Lagerzapfen des als Steg wirkenden zweiten Beschlagteils 120 drehbar gelagert und mit der ersten Innenverzahnung 112 in Zahneingriff. Somit bilden die drei Lagerzapfen drei weitere Drehachsen A für jeweils ein Zahnrad 130, wobei diese weiteren Drehachsen A gleichmäßig verteilt um die zentralen Drehachse A angeordnet sind und parallel zu dieser verlaufen. Die Lagerzapfen des Steges sind vorliegend um 120° zueinander um die zentrale Drehachse A verteilt angeordnet.

Ein um die zentrale Drehachse A drehbar zu den Beschlagteilen 110, 120 gelagertes Sonnenrad ist in den Figuren 17 und 18 nicht dargestellt. Das Sonnenrad ist vorzugsweise ein direkt oder über zusätzliche Bauteile mit einer Ausgangswelle eines ebenfalls nicht in den Figuren 17 und 18 dargestellten Elektromotors, insbesondere Getriebemotors, verbundenes Ritzel. Das als Hohlrad ausgebildete erste Beschlagteil 110, das als Steg ausgebildete zweite Beschlagteil 120, die als Planeten wirkenden Zahnräder 130 und das Sonnenrad bilden das Planetengetriebe. Das zweite Beschlagteil 120 ist zudem als ein Führungsbauteil der Rastverriegelung ausgebildet. Dazu weist das zweite Beschlagteil 120 drei Führungskanäle 122 für jeweils einen der drei Riegel 140 auf. Die Riegel 140 sind jeweils, bezogen auf die zentrale Drehachse A, in radialer Richtung in einer zugeordneten Führung 122 beweglich geführt. Die Riegel 140 tragen radial außen jeweils eine Verzahnung 142, die mit der zweiten Innenverzahnung 114 des ersten Beschlagteils 110 in Zahneingriff bringbar ist. Dazu können die Riegel 140 auf an sich bekannte Weise mittels eines um die zentrale Achse A schwenkbaren Exzenters 150 in die zweite Innenverzahnung 114 eingesteuert werden und aus der zweiten Innenverzahnung 114 ausgesteuert werden. Der Exzenter 150 kann ein Bestandteil einer Exzenterbaugruppe sein, die eine Steuerscheibe zur gezielten Bewegung der Riegel 140 radial nach innen aufweist. Wenn die in dem zweiten Beschlagteil 120 geführten Riegel 140 in Zahneingriff mit der zweiten Innenverzahnung 114 des ersten Beschlagteils 110 sind, sind das erste Beschlagteil 110 und das zweite Beschlagteil 120 miteinander derart verriegelt, dass keine Relativdrehung um die zentrale Drehachse A erfolgen kann.

Ein in das Sonnenrad eingeleitetes Drehmoment wird über die Zahnräder 130 zum zweiten Beschlagteil 120 (Steg) weitergeleitet. Das Planetengetriebe des Einstellbeschlags 100 hat die Hauptfunktion eines elektrischen Lehneneinstellers und dient der Verstellung der Lehne. Die Zähne, insbesondere deren Anzahl, Form und/oder Abmessungen, der Verzahnungen dieses Planetengetriebes können für eine Einstellfunktion mit hoher Geschwindigkeit ausgeführt, konstruiert und optimiert werden. In den Figuren 17 und 18 nicht dargestellte Leer- und Steuerwege, die jeweils zwischen einer Ausgangswelle des Getriebemotors, dem Exzenter 150 der Rastverriegelung und dem Sonnenrad wirken, sind so ausgelegt, dass bei Betätigung des Getriebemotors mit der Bewegung der Ausgangswelle, insbesondere nach geringem Drehspiel, zunächst der Exzenter 150 gedreht wird, wodurch die Riegel 140 radial nach innen aus dem Zahneingriff mit der zweiten Innenverzahnung 114 gezogen werden, so dass das erste Beschlagteil 110 und das zweite Beschlagteil 120 nicht mehr miteinander verriegelt sind. Bei weiterer Drehung der Ausgangswelle kommt ein Teil der Ausgangswelle in Kontakt zu einer Mitnahmegeometrie am Sonnenrad und treibt das Sonnenrad an. Aufgrund einer zwingend erforderlichen, beidseitigen Antriebsbewegung des Einstellbeschlags 100 und der Anforderung, bei einem Abschalten des Getriebemotors selbsttätig eine spielfrei verspannte Gesamtlage des Einstellbeschlags 100 zu erreichen, ist es vorteilhaft, dass bei Verwendung eines selbsthemmenden Getriebemotors der Getriebemotor nach Beendigung der Drehbewegung wieder in eine "Nulllage" bzw. "Mittelstellung" fährt, um den nächsten Einstellprozess mit beliebiger Richtung wieder wie zuvor beschrieben durchlaufen zu können. Eine entsprechende Ansteuerung kann mittels einer elektrischen Steuerung erfolgen. Grundsätzlich kann der beschriebene Funktionsablauf (das Anfahren der Mittelstellung) aber auch auf rein mechanischem Weg, unter Verwendung von Kupplungseinheiten, Federn, Leerwegen und Freischaltungen zwischen den beteiligten Bauteilen und mit Verwendung eines nicht selbsthemmenden Getriebemotors erfolgen.

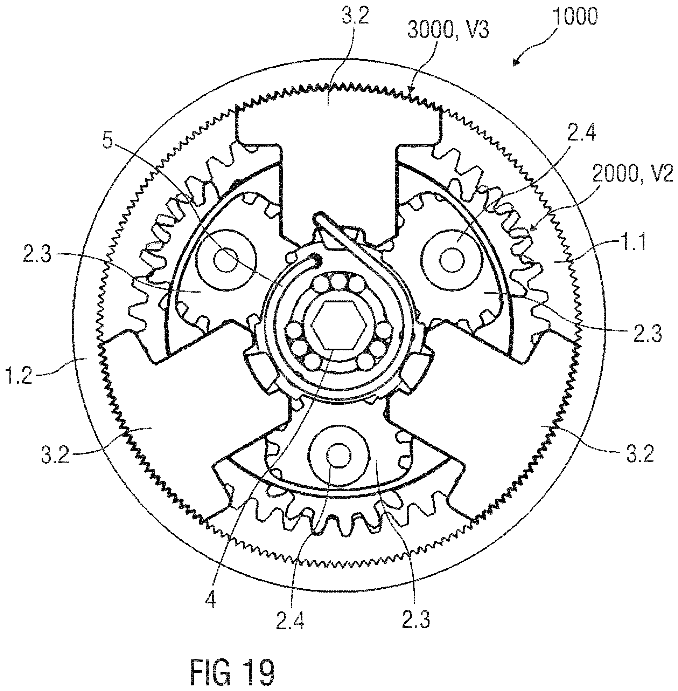

**Figur 19** zeigt schematisch eine Ansicht eines alternativen Einstellbeschlags 1000 mit radial versetzten Verzahnungen V2 und V3 für die Getriebeeinheit 2000 und die Verriegelungseinheit 3000.

Die Funktionsweise und der Aufbau entsprechen im Wesentlichen der Funktionsweise und dem Aufbau des Einstellbeschlags 1 bzw. 100 nach den **Figuren 1 bis 18**.

Darüber hinaus kann die Erfindung durch weitere Ausführungsformen von Komponenten eines Einstellbeschlags 1 umgesetzt sein.

In Abwandlungen der weiteren Ausführungsbeispiele kommen weitere mechanische Wirkprinzipien zum Einsatz, wie Schlingfederkupplungen, axial wirkende, geometrisch oder kraftgesteuerte Zahnkupplungen etc. Insgesamt ergibt sich eine Vielzahl möglicher Ausführungsvarianten für die Hauptfunktionselemente Getriebe, Rastgesperre und Spielfreistellung. Eine Übernahme weiterer Grundfunktionen, hier sei nur beispielhaft eine Steuerlogik erwähnt, kann zwischen den Hauptfunktionselementen - Getriebeeinheit 2 und Verriegelungseinheit 3 - auf verschiedene Weise erfolgen. So kann beispielsweise die Getriebeeinheit 2 (die Getriebestufe) durch an sich bekannte Keilsysteme oder gegeneinander verspannte Verzahnungen die Spielfreiheit realisieren, wenn gleichzeitig die parallel wirkende Rastverzahnung durch Einbringung eines Leerweges in den Kraftfluss (Verzahnung, Führung, ...) die Weiterleitung von Gebrauchslasten ins Getriebe ermöglicht. In diesem Fall würde bei einer Crashbelastung erst eine geringe Verformung der Getriebestufe erfolgen, gefolgt von einer dann in Eingriff kommenden Rastverzahnung mit entsprechend höherer Lastaufnahmefähigkeit. Vorstellbar ist aber ebenso die andere Aufteilung, bei der die Rastverzahnung - in gleicher Weise wie bei aus dem Stand der Technik bekannten Rastbeschlägen - sowohl spielfrei stellt als auch die Crashlasten aufnimmt, und die vorgeschaltete Planetenstufe - mit Leerweg gekoppelt - tatsächlich nur während des elektrischen Einstellvorgangs Kräfte/Drehmomente aufnimmt.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen. Die Verwendung des unbestimmten Artikels schließt eine Mehrzahl nicht aus. Eine einzelne Einrichtung kann die Funktionen mehrerer genannter Einheiten bzw. Einrichtungen ausführen.

### Bezugszeichenliste

- 1: Einstellbeschlag
- 1.1: erstes Beschlagteil
- 1.1.1: erste Innenverzahnung
- 1.1.2: Abstützung
- 1.1.3: Außenverzahnung
- 1.1.4: Aufnahme
- 1.2: zweites Beschlagteil
- 1.2.1: zweite Innenverzahnung
- 1.2.2: Außenverzahnung
- 2: Getriebeeinheit
- 2.1: Träger
- 2.1.1: Innenkontur
- 2.1.2: Befestigungselement
- 2.1.3: Durchgangsöffnung
- 2.1.4: Befestigungsmittel
- 2.1.5: Innenringkontur
- 2.2, 20.2: Riegelführung
- 2.2.1: Radialführung
- 2.3: Zahnrad
- 2.3.1: Außenverzahnung
- 2.4: Lagerbolzen
- 2.4.1: erstes axiales Lagerende
- 2.4.2: zweites axiales Lagerende
- 2.4.3: Lagerkörper
- 2.5: Aufnahmen
- 3: Verriegelungseinheit
- 3.1: Entriegelungseinheit
- 3.1.1: Slot
- 3.2: Riegel
- 3.2.1: Verzahnung
- 3.2.1a, 3.2.1b: Radialzahnkranz
- 3.2.2: Nocken
- 3.2.3: Führungsstift
- 3.2.4: Steg
- 3.3: Spielfreistellungselement
- 3.3.1: Spannkontur
- 3.3.2: Öffnungskontur
- 4: Steuermechanismus
- 4.1: Außenkontur
- 4.1.1: Vorsprung
- 4.2: Innenkontur
- 4.3: Führungsstift
- 5, 5': Lagefeder
- 5.1: Federarme
- 5.2: Bolzen
- 6: Trägerscheibe
- 7: Halterung
- 7.1: Ausnehmung
- 8.1, 8.2: Abdeckung
- 8.1.1, 8.2.1: Befestigungselement
- 9: Unterlegelement
- 10, 10': Lagerelement
- 10.1: Ring
- 10.2: Bremsarm
- 11: Antrieb
- 12: Flansch
- 12.1: oberer Flansch
- 12.2: unterer Flansch
- 13: Spannelement
- 13.1: Federarm
- 14: Übertragungsrohr
- 15: Motor
- 16: Öffnung
- 17: Bremseinrichtung

- 100, 1000: Einstellbeschlag
- 110: erstes Beschlagteil
- 112: erste Innenverzahnung
- 114: zweite Innenverzahnung
- 120: zweites Beschlagteil
- 122: Führung
- 130: Zahnrad, Planet
- 140: Riegel
- 142: Verzahnung
- 150: Exzenter
- 200, 2000: Getriebeeinheit
- 300, 3000: Verriegelungseinheit

- A: Achse
- eUR: entgegen der Uhrzeigerrichtung
- K1, K2: Kontaktbereich
- OS: Ausgangs- oder Offenstellung
- R: Rückenlehne
- S: Fahrzeugsitz
- SU: Sitzunterbau
- UR: Uhrzeigerrichtung
- V2, V3: Verzahnung
- VP: Verriegelungsposition
- Z1, Z2, Z: Zahn

## Patentansprüche

1. Einstellbeschlag (1, 100, 1000) für einen Fahrzeugsitz (S), insbesondere zum Einstellen einer Neigung einer Rückenlehne (R) des Fahrzeugsitzes (S), aufweisend ein erstes Beschlagteil (1.1), insbesondere verbindbar mit einem Sitzunterbau (SU) des Fahrzeugsitzes (S), und ein um eine Achse (A) relativ zum ersten Beschlagteil (1.1) schwenkbares zweites Beschlagteil (1.2), insbesondere verbindbar mit einer Rückenlehne (R) des Fahrzeugsitzes (S),
wobei
das erste Beschlagteil (1.1) und das zweite Beschlagteil (1.2) sowohl Bestandteile einer Getriebeeinheit (2, 200, 2000) des Einstellbeschlags (1, 100, 1000) als auch einer Verriegelungseinheit (3, 300, 3000) des Einstellbeschlags (1, 100, 1000) sind,
**dadurch gekennzeichnet, dass** das erste Beschlagteil (1.1) mindestens eine erste Innenverzahnung (1.1.1) und das zweite Beschlagteil (1.2) mindestens eine zweite Innenverzahnung (1.2.1) aufweisen, wobei sowohl die Getriebeeinheit (2, 200, 2000) als auch die Verriegelungseinheit (3, 300, 3000) eingerichtet sind, sowohl mit der ersten Innenverzahnung (1.1.1) als auch mit der zweiten Innenverzahnung (1.2.1) in Eingriff zu gelangen.

2. Einstellbeschlag (1, 100, 1000) nach Anspruch 1, **dadurch gekennzeichnet, dass** die Rückenlehne (R) bei geöffneter Verriegelungseinheit (3, 300, 3000) mittels der Getriebeeinheit (2, 200, 2000) mit dem Sitzunterbau (SU) gekoppelt ist.

3. Einstellbeschlag (1, 100, 1000) nach Anspruch 1 oder 2, **gekennzeichnet durch** einen direkten Antrieb (11), der mit der Getriebeeinheit (2, 200, 2000) gekoppelt ist.

4. Einstellbeschlag (1, 100, 1000) nach einem der vorhergehenden Ansprüche, **dadurch gekennzeichnet, dass** die Getriebeeinheit (2, 200, 2000) einen Steuermechanismus (4) umfasst, der mit der Verriegelungseinheit (3, 300, 3000) derart gekoppelt ist, dass in einer Verriegelungsposition (VP) des Einstellbeschlags (1) sowohl ein Eingriff der Getriebeeinheit (2, 200, 2000) als auch ein Eingriff der Verriegelungseinheit (3, 300, 3000) in die Beschlagteile (1.1, 1.2) erfolgt.

5. Einstellbeschlag (1, 100, 1000) nach Anspruch 4, **dadurch gekennzeichnet, dass** ein Entriegelungsmechanismus vorgesehen und derart eingerichtet ist, dass dieser, bei Betätigung des Steuermechanismus (4) durch den Antrieb (11) sowohl bei einer Bewegung in Uhrzeigerrichtung (UR) als auch bei einer Bewegung entgegen der Uhrzeigerrichtung (eUR), die Verriegelungseinheit (3, 300, 3000) freigibt.

6. Einstellbeschlag (1, 100, 1000) nach einem der vorhergehenden Ansprüche, **dadurch gekennzeichnet, dass** die Getriebeeinheit (2, 200, 2000) und die Verriegelungseinheit (3, 300, 3000) separat voneinander ausgebildet und miteinander bewegungsgekoppelt sind.

7. Einstellbeschlag (1, 100, 1000) nach einem der vorhergehenden Ansprüche, **dadurch gekennzeichnet, dass** die Verriegelungseinheit (3, 300, 3000) eine Anzahl von Riegeln (3.2) umfasst, die jeweils zwei Radialzahnkränze (3.2.1a, 3.2.1b) aufweisen, die axial nebeneinander angeordnet sind.

8. Einstellbeschlag (1, 100, 1000) nach Anspruch 7, **dadurch gekennzeichnet, dass** die Radialzahnkränze (3.2.1a, 3.2.1b) des jeweiligen Riegels (3.2) derart eingerichtet sind, dass jeweils nur ein Zahn (Z1, Z2) oder eine Mehrzahl von Zähnen (Z) des jeweiligen Radialzahnkranzes (3.2.1a, 3.2.1b) im eingefallenen Zustand mit der zugehörigen Innenverzahnung (1.1.1, 1.2.1) in Eingriff gelangt.

9. Fahrzeugsitz (S) mit mindestens einem Einstellbeschlag (1, 100, 1000) nach einem der vorhergehenden Ansprüche.

## Claims

1. Adjustment fitting (1, 100, 1000) for a vehicle seat (S), in particular for adjusting an inclination of a backrest (R) of the vehicle seat (S), comprising a first fitting part (1.1), in particular connectable to a seat substructure (SU) of the vehicle seat (S), and a second fitting part (1.2) which is pivotable about an axis (A) relative to the first fitting part (1.1) and is in particular connectable to a backrest (R) of the vehicle seat (S),
wherein
the first fitting part (1.1) and the second fitting part (1.2) are constituent parts both of a gearing unit (2, 200, 2000) of the adjustment fitting (1, 100, 1000) and of a locking unit (3, 300, 3000) of the adjustment fitting (1, 100, 1000),
**characterized in that** the first fitting part (1.1) has at least one first internal toothing (1.1.1) and the second fitting part (1.2) has at least one second internal toothing (1.2.1), wherein both the gearing unit (2, 200, 2000) and the locking unit (3, 300, 3000) are configured to mesh both with the first internal toothing (1.1.1) and with the second internal toothing (1.2.1).

2. Adjustment fitting (1, 100, 1000) according to Claim 1, **characterized in that** the backrest (R) is coupled to the seat substructure (SU) by means of the gearing unit (2, 200, 2000) when the locking unit (3, 300, 3000) is open.

3. Adjustment fitting (1, 100, 1000) according to Claim 1 or 2, **characterized by** a direct drive (11) that is coupled to the gearing unit (2, 200, 2000).

4. Adjustment fitting (1, 100, 1000) according to any one of the preceding claims, **characterized in that** the gearing unit (2, 200, 2000) comprises a control mechanism (4) that is coupled to the locking unit (3, 300, 3000) such that, in a locking position (VP) of the adjustment fitting (1), both the gearing unit (2, 200, 2000) and the locking unit (3, 300, 3000) mesh with the fitting parts (1.1, 1.2).

5. Adjustment fitting (1, 100, 1000) according to Claim 4, **characterized in that** an unlocking mechanism is provided and configured such that, when the control mechanism (4) is actuated by the drive (11), said unlocking mechanism releases the locking unit (3, 300, 3000) both in the case of a movement clockwise (UR) and in the case of a movement counterclockwise (eUR).

6. Adjustment fitting (1, 100, 1000) according to any one of the preceding claims, **characterized in that** the gearing unit (2, 200, 2000) and the locking unit (3, 300, 3000) are formed separately from one another and are coupled to one another in terms of movement.

7. Adjustment fitting (1, 100, 1000) according to any one of the preceding claims, **characterized in that** the locking unit (3, 300, 3000) comprises a number of locking elements (3.2), each of which has two radial toothed rings (3.2.1a, 3.2.1b) which are arranged axially adjacent to one another.

8. Adjustment fitting (1, 100, 1000) according to Claim 7, **characterized in that** the radial toothed rings (3.2.1a, 3.2.1b) of the respective locking element (3.2) are configured such that in each case only one tooth (Z1, Z2) or a plurality of teeth (Z) of the respective radial toothed ring (3.2.1a, 3.2.1b) meshes with the associated internal toothing (1.1.1, 1.2.1) in the engaged state.

9. Vehicle seat (S) having at least one adjustment fitting (1, 100, 1000) according to any one of the preceding claims.

## Revendications

1. Ferrure de réglage (1, 100, 1000) pour un siège de véhicule (S), en particulier pour régler l'inclinaison d'un dossier (R) du siège de véhicule (S), présentant une première pièce de ferrure (1.1), en particulier apte à être reliée à une structure de siège (SU) du siège de véhicule (S), et une deuxième pièce de ferrure (1.2) apte à pivoter autour d'un axe (A) par rapport à la première pièce de ferrure (1.1), en particulier apte à être reliée à un dossier (R) du siège de véhicule (S),
dans laquelle
la première pièce de ferrure (1.1) et la deuxième pièce de ferrure (1.2) sont, tant l'une que l'autre, des composants d'une unité de transmission (2, 200, 2000) de la ferrure de réglage (1, 100, 1000) et d'une unité de verrouillage (3, 300, 3000) de la ferrure de réglage (1, 100, 1000),
**caractérisée en ce que** la première pièce de ferrure (1.1) comporte au moins une première denture intérieure (1.1.1) et la deuxième pièce de ferrure (1.2) présentent au moins une deuxième denture intérieure (1.2.1), l'unité de transmission (2, 200, 2000) ainsi que l'unité de verrouillage (3, 300, 3000) étant toutes deux conçues pour s'engrener aussi bien avec la première denture intérieure (1.1.1) qu'avec la deuxième denture intérieure (1.2.1).

2. Ferrure de réglage (1, 100, 1000) selon la revendication 1, **caractérisée en ce que** le dossier (R) est relié à l'assise (SU) du siège au moyen de l'unité de transmission (2, 200, 2000) lorsque l'unité de verrouillage (3, 300, 3000) est libérée.

3. Ferrure de réglage (1, 100, 1000) selon la revendication 1 ou la revendication 2, **caractérisée par** un organe d'entraînement direct (11) qui est relié à l'unité de transmission (2, 200, 2000).

4. Ferrure de réglage (1, 100, 1000) selon l'une des revendications précédentes, **caractérisée en ce que** l'unité de transmission (2, 200, 2000) comprend un mécanisme de commande (4) relié à l'unité de verrouillage (3, 300, 3000) de telle sorte que, dans une position de verrouillage (VP) de la ferrure de réglage (1), il y ait à la fois un engagement de l'unité de transmission (2, 200, 2000) et un engagement de l'unité de verrouillage (3, 300, 3000) dans les éléments de ferrure (1.1, 1.2).

5. Ferrure de réglage (1, 100, 1000) selon la revendication 4, **caractérisée en ce qu'**un mécanisme de déverrouillage est prévu et aménagé de telle sorte que celui-ci, lors de l'actionnement du mécanisme de commande (4) par l'organe d'entraînement (11), libère l'unité de verrouillage (3, 300, 3000) aussi bien lors d'un mouvement dans le sens des aiguilles d'une montre (UR) que lors d'un mouvement dans le sens contraire des aiguilles d'une montre (eUR).

6. Ferrure de réglage (1, 100, 1000) selon l'une des revendications précédentes, **caractérisée en ce que** l'unité de transmission (2, 200, 2000) et l'unité de verrouillage (3, 300, 3000) sont conçues séparément l'une de l'autre et sont reliées l'une à l'autre de manière mobile.

7. Ferrure de réglage (1, 100, 1000) selon l'une des revendications précédentes, **caractérisée en ce que** l'unité de verrouillage (3, 300, 3000) comprend une pluralité de verrous (3.2) qui présentent chacun deux couronnes dentées radiales (3.2.1a, 3.2.1b) qui sont agencées axialement côte à côte.

8. Ferrure de réglage (1, 100, 1000) selon la revendication 7, **caractérisée en ce que** les couronnes dentées radiales (3.2.1a, 3.2.1b) de chaque verrou (3.2) sont aménagées de telle sorte qu'une seule dent (Z1, Z2) ou une pluralité de dents (Z) de la couronne dentée radiale respective (3.2.1a, 3.2.1b) s'engrène avec la denture intérieure correspondante (1.1.1, 1.2.1) à l'état enfoncé.

9. Siège de véhicule (S) comprenant au moins une ferrure de réglage (1, 100, 1000) selon l'une des revendications précédentes.
